Europäisches Patentamt

European Patent Office

Office européen des brevets

(19)

(11) **EP 1 538 565 A1**

(12) **EUROPEAN PATENT APPLICATION**
published in accordance with Art. 158(3) EPC

(43) Date of publication:
08.06.2005 Bulletin 2005/23

(51) Int Cl.⁷: **G06T 7/20**

(21) Application number: 03791330.8

(86) International application number:
**PCT/JP2003/010837**

(22) Date of filing: 27.08.2003

(87) International publication number:
**WO 2004/021281 (11.03.2004 Gazette 2004/11)**

(84) Designated Contracting States:
**AT BE BG CH CY CZ DE DK EE ES FI FR GB GR
HU IE IT LI LU MC NL PT RO SE SI SK TR**

(30) Priority: **30.08.2002 JP 2002254493**

(71) Applicant: **NEC Corporation
Minato-ku, Tokyo 108-8001 (JP)**

(72) Inventor: **KOIZUMI, Hirokazu,
c/o NEC Corporation
Tokyo 108-8001 (JP)**

(74) Representative: **VOSSIUS & PARTNER
Siebertstrasse 4
81675 München (DE)**

(54) **OBJECT TRACE DEVICE, OBJECT TRACE METHOD, AND OBJECT TRACE PROGRAM**

(57) Object-zone extraction section 12 receives image information through image input terminal 11 and extracts object zones from the received image information. Characteristic-quantity generation section 14 generates the characteristic quantities of objects and the characteristic quantities of object zones. Characteristic-quantity synthesis section 15 synthesizes the characteristic quantities of a plurality of objects to generate a synthesized characteristic quantity. Correspondence establishment section 17 calculates the degrees of similarity between the characteristic quantities of object zones and synthesized characteristic quantities, and finds an optimum correspondence between the objects and object zone, on the basis of calculated degrees of similarity.

FIG. 2

**Description**

**Technical Field**

The present invention relates to an object-tracking device, an object-tracking method and an object-tracking program for tracking an object based on image information, and particularly to an object-tracking device, an object-tracking method and an object-tracking program that enables continued following of a target object even when a plurality of objects become positioned in a superposed relationship on a display screen.

**Background Art**

It is required for an object-tracking device, adapted for tracking an object such as a human body based on image information provided from time to time from a video camera, etc., to continue following the movement of the object to be tracked even when a plurality of the objects become positioned in a crossover or superposed relationship. JP H06-169458 A1 describes an object-tracking device capable of continuing to follow the movements of objects even when the objects intersect while tracking is being conducted.

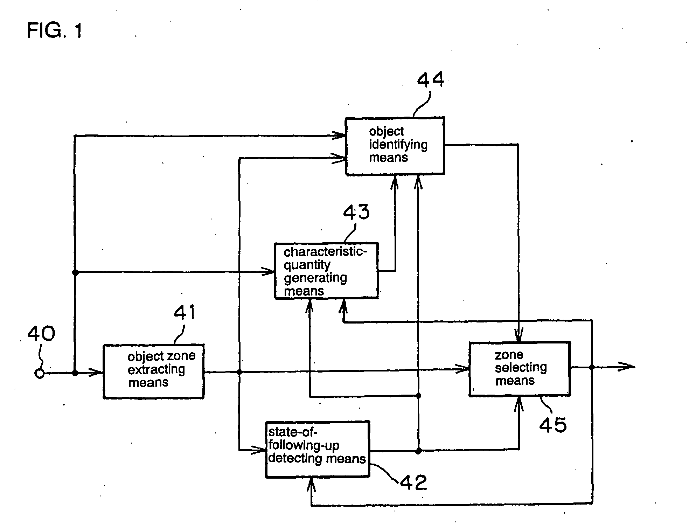

Fig. 1 is a block diagram illustrating the construction of an object-tracking device of prior art described in JP H06-169458 A1. The object-tracking device, as shown in Fig. 1, comprises object zone extracting means 41 for extracting a object zone from the image information periodically provided to input terminal 40 by a video camera or the like; state-of-following-up detecting means 42 adapted for comparing the extracted object zone with the object zone to be tracked to detect the state of the object that is to be tracked, wherein the object zone to be tracked is provided from zone selecting means 45 that will be described later; characteristic-quantity generating means 43 for generating characteristic quantities of objects based on the image information and the object zone to be tracked; object identifying means 44 for generating characteristic quantities of the entire object zones based on both the image information and the object zones extracted by object zone extracting means 41 as well as for selecting the object zone having the characteristic quantity closest to the characteristic quantity of the object received from characteristic quantity generating means 43; and zone selecting means 45 to provide as an output the object zone that is to be tracked.

In the above description, the term "an object zone" means the zone that includes an object in the image. The state of an object to be tracked provided by state-of-following-up detecting means 42 includes: a superposed or crossover state in which the image of an object to be tracked intersects with that of another object; and a tracked state in which an object to be tracked is tracked in a stand-alone state. Characteristic quantity generating means 43 has a memory means for storing the generated characteristic quantities and furthermore includes updating means for updating the characteristic quantity stored in the memory means. Characteristic quantity generating means 43, when the state of the object is in the tracked state, updates the characteristic quantity stored in the memory means, while it maintains the characteristic quantities stored in the memory means unchanged if the state of the object is in a superposed state.

Object identifying means 44 selects the object zone that has the characteristic quantity most resembling the characteristic quantity of the object zone stored in characteristic quantity generating means 43 only if the object of interest is in a superposed state. Zone selecting means 45 selects, as an object zone to be tracked, the object zone selected by object identifying means 44 when the state of the object makes transition from the state of the superposed state to the tracked state. Except for the case when the state of the object makes transition from the superposed state to the tracked state, zone-selecting means 45 selects, from all the object zones extracted by object zone extracting means 41, the object zone present in the position nearest the object zone that has been previously tracked and provides the selected object zone as an output. In this way, zone-selecting means 45 provides the selected object zone as a new object zone to be tracked. In the above description, "the object zone that has been previously tracked" means the object zone to be tracked that is determined on the basis of the image information from one frame that precedes the most recent image information received image information from a video camera etc.

In this way, the object-tracking device continuously performs tracking of an object zone through the use of the most recently received image information when the object is in the tracked state. When the state of the object makes transition from the tracked state to the superposed state, the characteristic quantity of the object immediately preceding the transition is saved. When the state of the object makes transition from the superposed state to the tracked state, the tracking of the object zone is continuously performed with the object zone selected by object identifying means 44 that is taken as the object zone to be tracked. Accordingly, the tracking of the object zone can be continued even when the transition from the tracked state to the superposed state and subsequent recovery to the tracked state takes place in the state of the object.

As described above, the object-tracking device of prior art has been capable of continuing the tracking of an object zone even in the case where a plurality of objects intersect by associating an object with an object zone, when the object leaves the superposed state, on the basis of the characteristic quantity of the object immediately before the occurrence of the superposed state.

In addition, the article, Tracking Interacting People, presented by S. J. McKenna, S. Jabri, Z. Duric, and H. Wechsler in Proceedings of the Fourth IEEE International Conference on Automatic Face and Gesture Recognition, March 28-30, 2000, pp. 348-353 describes a method for continuing tracking of an object when intersecting objects part from each other to leave the superposed state, in which the probability of the object of interest to belong to each of the object zones is calculated and the object is associated with the object zone of the largest probability calculated.

The object-tracking device of prior art, however, is liable to lead to an erroneous correspondence between an object and an object zone in the case where a plurality of objects are contained in a single object zone at the time when a superposed state is created through intersection of a plurality of objects and then the superposed state is dropped off, or in the case when objects present in a certain object zone are replaced with other objects before and after creation of the superposed state of interest, because the characteristic quantities of the objects just before the change in the superposed state accord with none of the characteristic quantities of the objects included in the relevant object zone after the change in the superposed state. For example, in the case when four people (A, B, C and D) intersect and then part into groups of two people each (a group of A and B and a group of C and D), or in the case when two people (A and B) and person (C) intersect and then the grouping of the people changes to create the groups of person (A) and two people (B and C), the object-tracking device often mistakes correspondence between an object and an object zone. Furthermore, while conventional object-tracking devices select, with each object, the object zone that have the highest similarity to the object of interest, this way of association between object and object zone does not always guarantee consistent correspondences between overall objects and object zones.

**Disclosure of the Invention**

It is an object of the present invention to provide a device and a method for tracking an object and also to provide a program for tracking an object that enable correct association between an object and an object zone even in the case when, after a plurality of objects of a superposed state in an image have parted from one another, a plurality of objects are still present in an image zone, or in the case when the grouping of objects, each group being made up of superposed objects in the image, changes to counterchange the objects included in the groups before and after a crossover of the groups. It is another object of the present invention to enable the selection of optimum correspondences between overall objects and object zones when associating objects and object zones into corresponding relationship.

The object-tracking device according to the present invention is an object-tracking device for tracking an object based on image information, comprising: a characteristic-quantity synthesizing means adapted to synthesize object characteristic quantities representative of characteristic quantities of respective objects included in the image information to generate synthesized characteristic quantities; and a correspondence-establishing means for establishing correspondences between objects and object zones on the basis of degrees of similarity between characteristic quantities of the object zones and the synthesized characteristic quantities, wherein the object zones refer to the zones that are extracted from the image information and further include the objects of interest.

Preferably, the characteristic-quantity synthesizing means synthesizes characteristic quantities for each of all required combinations of a plurality of objects to generate a synthesized characteristic quantity, and the correspondence-establishing means establishes correspondences between objects and object zones through comparing each of the synthesized characteristic quantities generated by the characteristic-quantity synthesizing means and zone characteristic quantities representative of the characteristic quantities of object zones. By such construction, an optimum correspondence relation can be opted for between the objects and object zone when establishing the correspondence between objects and object zone.

Preferably, the object-tracking device is provided with: an object-zone extracting means for extracting the object zones from the image information and providing the object-zone information that includes the image information about the object zones, a state-of-tracking deciding means for deciding the states of tracking of individual objects or object zones, wherein the state-of-tracking means relative positions of each object with respect to other objects, and a characteristic-quantity generating means for generating the zone characteristic quantities and object characteristic quantities through the use of the image information, the object-zone information and the decision results effected by the state-of-tracking deciding means, wherein the characteristic-quantity synthesizing means generates synthesized characteristic quantities through the use of said object characteristic quantities and decision results effected by the state-of-tracking deciding means. By such construction, the synthesized characteristic quantities can be generated on the basis of relative positions with respect to other objects.

Preferably, the state-of-tracking deciding means decides the states of tracking of respective objects or object zones based on the object-zone information and the correspondence information that has been determined that indicates the corresponding relationship of the object zones and objects prior to the present to provide the first zone-correspondence information that indicates the corresponding relationship of the object zones and objects and the states of tracking, the characteristic-quantity generating means generates zone characteristic quantities and object characteristic quantities based on the current image information, the object-zone information, the first zone-correspondence information and the correspondence information that has been determined, the characteristic-quantity synthesizing means generates synthesized characteristic quantities that serve as candidates to be placed in the corresponding relationship to individual object zones based on the object characteristic quantities and the first zone-correspondence information to provide synthesized characteristic-quantity information, wherein the synthesized characteristic-quantity information is the information that includes synthesized characteristic quantities and the corresponding relationship between the synthesized characteristic quantities and objects used for the generation of the synthesized characteristic quantities, and the correspondence-establishing means includes a correspondence-determining means that associates objects and object zones to place in the corresponding relationship based on the first zone-correspondence information, zone characteristic-quantity information that is the information indicative of the zone characteristic quantities and the synthesized characteristic-quantity information to provide the correspondence information that has been determined in the present time. This construction enables preventing establishment of erroneous correspondences between objects and object zones even if a plurality of objects are still present in an object zone after an object of interest parts or if groups of objects in a superposed or crossover state each are counter-changed when the two groups intersect.

In the object-tracking device, it is preferred that the state of tracking includes at least one of or a combination of: a stand-alone state in which only a single object resides in an object zone; a crossover state in which a plurality of objects correspond to a single object zone; and a state of parting that is a transient state in which a single object zone is parting into a plurality of object zones. This enables deciding positional relations of an object relative to other objects.

Preferably, the characteristic-quantity generating means generates zone characteristic quantities, each including at least one of or one of combinations of a color histogram, area, image template and color histogram normalized with respect to the area, of the object zone, and finds an object zone corresponding to the object of interest from the first zone-correspondence information and generates at least one or one of combinations of a color histogram, area, image template and color histogram normalized with respect to the area of the object zone as an object characteristic quantity.

Preferably, the state-of-tracking deciding means includes an object-zone storing means for storing the object-zone information, an object-tracking means for tracking an object based on the object-zone information, the correspondence information that has been determined and the object-zone information prior to the present provided from the object-zone storing means and further providing a second zone-correspondence information that indicates the correspondences between objects and object zones, and a state-deciding means for deciding the states of tracking of objects based on the second zone-correspondence information, the object-zone information and the object-zone information prior to the present and providing the first zone-correspondence information.

Preferably, the state-deciding means, based on at least one of or one of the combinations of the correspondences between objects and object zones, distances between object zones and continued periods of separation of the object zones, obtained from the second zone-correspondence information and object-zone information, groups the objects that have a common region in their corresponding object zones to sort the objects and corresponding object zones into one class, and sorts the object, which differs in the corresponding object zone from any other objects, and the object zone corresponding thereto into one class to sort the objects and object zones into a plurality of classes, and decides the state of tracking on the basis of the sorted classes.

Preferably, the state of tracking includes the state of parting that is a transient state, through which an object zone parts into a plurality of object zones,
    the state-deciding means decides that, if two or more object zones are included in a sorted class, then the class meets the condition of being in a state of parting, and that, if a class meets the condition of being in a state of parting, the states of tracking of the objects and object zones included in the class are the state of parting.

It is preferred that, if the sorted class meets the condition of being in the state of parting and if the sorted class meets at least one of or one of the combinations of the conditions that two or more objects are included in the class, that each of the distances between the object zones included in the class exceeds a predetermined threshold and that continued periods of separation of the object zones included in the class exceed a predetermined threshold, the state-deciding means decides that the states of tracking of the objects and object zones included in the class are the state of parting. This construction enables preventing an erroneous decision to be led that the positional relation of an object of interest relative to another object is in a state of parting.

Preferably, the state of tracking includes a state of parting and a stand-alone state in which a single object resides in an object zone, and if the sorted class includes only one object and if the states of tracking of the object and the object zone included in the class are not the state of parting, then the state-deciding means decides that the states of tracking of the object and the object zone included in the class are the stand-alone state.

It is preferred that the state of tracking includes a state of parting and also a crossover state in which a plurality of objects are in corresponding relationship to a single object zone, and if a sorted class includes two or more objects and if the states of tracking of the objects and the object zones included in the class are not the state of parting, the state-deciding means decides that the states of tracking of the objects and the object zones included in the class are the crossover state.

Preferably, the characteristic-quantity generating means includes: a characteristic-quantity extracting means for extracting zone characteristic quantities from the image information, object-zone information and the first zone-correspondence information and providing the zone characteristic-quantity information that is the information indicative of the zone characteristic quantities; characteristic-quantity storing means for storing object characteristic quantities and selecting the stored object characteristic quantities to supply the selected object characteristic quantities, as required; and characteristic-quantity updating means for updating the object characteristic quantities stored in the characteristic-quantity storing means based on the zone characteristic-quantity information, the first zone-correspondence information or correspondence information that has been determined and the object characteristic quantities generated prior to the present.

It is preferred that the state of tracking includes the state of parting that is a transient state through which an object zone parts into a plurality of object zones, and the characteristic-quantity extracting means includes, into zone characteristic-quantity information, the information indicating that there is no need of establishing correspondences to objects for the object zones that represent the states other than the state of parting while in their tracking states, and the correspondence-determining means excludes, from the establishment of the corresponding relationship, the object zones indicated in the zone characteristic-quantity information as there is no need of establishing corresponding relationship to objects. This construction allows the amount of calculation for calculation of the degrees of similarity to be reduced.

Preferably, the state of tracking includes a stand-alone state in which a single object resides in an object zone, and the characteristic-quantity updating means decides whether or not the state of tracking of an object is the stand-alone state on the basis of the first zone-correspondence information or the correspondence information that has been determined, and if the state of tracking of the object is the states other than the stand-alone state, does not update the object characteristic quantities stored in the characteristic-quantity storing means.

Preferably, the characteristic-quantity synthesizing means determines all possible combinations of objects and object zones based on the object characteristic quantities generated by the characteristic-quantity generating means and the first zone-correspondence information, and synthesizes object characteristic quantities only for the determined combinations of objects and object zones to generate synthesized characteristic quantities. This construction allows the procedures for generating unnecessary synthesized characteristic quantities to be deleted.

Preferably, characteristic-quantity synthesizing means calculates the synthesis ratios that are coefficients for adjusting the ratios at which the object characteristic quantities are synthesized and generates synthesized characteristic quantities on the basis of the synthesis ratios and object characteristic quantities. By the construction described above, it is enabled to correct an error arising from the magnitude of an object when the magnitude of the object in the image space differs from the actual magnitude of the object.

It is preferred that the characteristic-quantity synthesizing means receives zone characteristic quantities as well as object characteristic quantities from the characteristic-quantity generating means, calculates synthesized characteristic quantities depending on desired synthesis ratios on the basis of the received zone characteristic-quantity information and object characteristic quantities, and provides the synthesized characteristic quantity for the synthesis ratio that yields the highest of all the degrees of similarity between the calculated synthesized characteristic quantities and the zone characteristic quantities. By this construction, it suffices that the degrees of similarity are calculated based on only one synthesized characteristic quantity for all combinations of objects and object zones, whereby redundant calculation procedures can be omitted.

Preferably, the state of tracking includes a state of parting that is a transient state through which an object zone parts into a plurality of object zones, and the characteristic-quantity synthesizing means generates synthesized characteristic quantities only for the object zones that are indicated as having the state of parting as their states of tracking. This construction allows the procedures for generating unnecessary synthesized characteristic quantities to be deleted.

Preferably, the object characteristic quantity includes an area of an object, and the characteristic-quantity synthesizing means calculates the synthesis ratios that are coefficients for adjusting the ratios at which the object characteristic quantities are synthesized on the basis of the areas of objects included in the object characteristic quantities and generates synthesized characteristic quantities from the synthesis ratios and the object characteristic quantities. This construction allows reducing the amount of calculation for calculating the synthesis ratio.

Preferably, the characteristic-quantity synthesizing means limits the synthesis ratios within a predetermined range on the basis of the variations in the areas of objects. This construction allows a correct synthesis ratio to be obtained even when an object area varies in an image.

Preferably, the characteristic-quantity synthesizing means receives zone characteristic quantities together with object characteristic quantities from the characteristic-quantity generating means, calculates synthesized characteristic quantities within the range of the variations in the areas of objects based on the received zone characteristic quantities and object characteristic quantities, and provides the synthesized characteristic quantities that have the highest degrees of similarity to the zone characteristic quantities of the object zones of interest. By this construction, it suffices to provide only one synthesized characteristic quantity for each of object combinations, whereby redundant procedures can be deleted.

It is preferred that the object characteristic quantity includes an image template representative of the shape and color of an object, and the characteristic-quantity synthesizing means decides the back-to-belly relation of each of the objects from the image templates and zone characteristic quantities and obtains the synthesized characteristic quantities by synthesizing the image templates based on the respective decided back-to-belly relations of the objects. This construction allows the correct calculation of the corresponding relationship between objects and object zones even when any object partially overlaps behind another object.

It is preferred that the correspondence-determining means is provided with a correspondence-calculating means for calculating the combination of objects and object zones of the highest similarity from all the possible combinations of the objects and object zones that are possibly associated in corresponding relationship based of the synthesized characteristic-quantity information, the zone characteristic-quantity information and the first zone-correspondence information, selecting the calculated combination of objects and object zones as an optimum combination and generating the optimum-correspondence information that indicates the optimum corresponding relationship between objects and object zones, and a correspondence-deciding means for determining the corresponding relationship between objects and object zones on the basis of the first zone-correspondence information and the optimum-correspondence information and providing the correspondence information that has been determined that is the information including the decided corresponding relationship between objects and object zones. This construction allows the selection of optimum corresponding relationship when objects and object zones are associated in corresponding relationship.

Preferably, the correspondence-calculating means calculates a total degree of similarity for each of all the possible combinations of objects and object zones, the total degree of similarity being a sum of the degrees of similarity between the characteristic quantities of object zones and synthesized characteristic quantities within each combination, and decides to be the combination of the highest similarity on the combination of the highest total degree of similarity, of the all the possible combinations.

It is preferred that the first zone-correspondence information includes the information about an at-rest/in-motion state that indicates whether an object zone is at rest or in motion, and the correspondence-calculating means excludes the combination of the object and object zone that is indicated as being at rest in the information about an at-rest/in-motion state from all the possible combinations. This construction allows the amount of calculation of the correspondence-calculating means to be reduced by calculating exclusively the combinations in which the object zones that exhibit the state of at-rest in their at-rest/in motion states cannot be associated in corresponding relationship to any objects.

It is preferred that if the degrees of combined similarity that can be obtained from the degrees of similarity of the sets of the objects and object zones, the sets of the objects and object zones making up the combinations decided to be ranked as the highest similarity, are equal to or lower than a predetermined threshold, then the correspondence-calculating means selects, from the combinations of the degrees of combined similarity ranked as the highest similarity of all possible combinations of objects and object zones, the combinations of the degrees of combined similarity within the predetermined threshold, includes the corresponding relationship of objects and object zones common to the selected combinations, into the optimum-correspondence information as optimum correspondences, and further, for the objects and object zones having the corresponding relationship that are not included in the corresponding relationship of the object and object zone common to the selected combinations, includes the information indicating that there are no optimum correspondence between the objects and object zones, into the optimum-correspondence information; for the objects not indicated as having no optimum corresponding relationship to any object zones in the optimum-correspondence information, the correspondence-deciding means provides the information indicating the corresponding relationship of objects and object zones included in the optimum-correspondence information as the correspondence information that has been determined; and for the objects indicated as having no optimum corresponding relationship to any object zones in the optimum-correspondence information, the correspondence-deciding means provides the information indicating the corresponding relationship of objects and object zones included in the first zone-correspondence information as the correspondence information that has been determined. This construction allows the selection of erroneous corresponding relationship between objects and object zones to be obviated.

Preferably, the state of tracking includes a state of parting that is a transient state through which an object zone parts into a plurality of object zones, and the correspondence-deciding means determines the corresponding relationship between objects and object zones to be indicated in the optimum-correspondence information only for the object zones that exhibit a state of parting as their states of tracking. This construction allows reduction of the procedures for deciding the corresponding relationship between objects and object zones.

Preferably, the state of tracking includes a state of parting that is a transient state through which an object zone parts into a plurality of object zones, and the correspondence-deciding means provides the correspondences between objects and object zones included in the first zone-correspondence information as the correspondence information that has been determined only for the object zones that exhibit states other than the state of parting while in their tracking states. This construction allows reduction of the procedures for deciding the corresponding relationship between objects and object zones.

The object-tracking method according to the present invention is an object-tracking method intended for tracking an object based on image information. The method synthesizes object characteristic quantities, which represent characteristic quantities of respective objects included in the image information, to generate a synthesized characteristic quantity, and establishes a correspondence between object or objects and object zone on the basis of the degree of similarity between the synthesized characteristic quantity and characteristic quantity of the object zone, wherein the object zone is a region extracted from the image information and including the object or objects.

The object-tracking method preferably synthesizes characteristic quantities for each of all required combination of a plurality of objects to generate a synthesized characteristic quantity, and establishes corresponding relationship between object or objects and object zone through comparison of the generated synthesized characteristic quantity and zone characteristic quantity that represents the characteristic quantity of the object zone. The above-described method enables the selection of optimum corresponding relationship between objects and object zones when objects and object zones are to be associated in corresponding relationship.

The object-tracking method preferably extracts an object zone from the image information to provide object-zone information that includes the image information about the object zone, decides a state of tracking representative of a relative position with respect to another object for every object or object zone, generates zone characteristic quantities, object characteristic quantities through the use of the image information, the object-zone information, and the decision results, and generates synthesized characteristic quantities through the use of the object characteristic quantities and the decision results. The above-described method enables generation of synthesized characteristic quantities based on the positional relations relative to other objects.

It is preferred that the object-tracking method decides the state of tracking of every object or every object zone based on the object-zone information and the correspondence information that has been determined that indicates the corresponding relationship between object zones and objects prior to the present to provide the first zone-correspondence information indicative of the corresponding relationship between the objects and object zones and the states of tracking; generates zone characteristic quantities and object characteristic quantities based on the present image information, the object-zone information, the first zone-correspondence information and the correspondence information that has been determined; generates a synthesized characteristic quantity that functions as candidate to be placed in corresponding relationship to each object zone on the basis of the object characteristic quantities and the first zone-correspondence information to provide the synthesized characteristic-quantity information, which is the information including the synthesized characteristic quantities and the corresponding relationship between synthesized characteristic quantities and objects used for generating the synthesized characteristic quantities of interest; and establishes correspondences between objects and object zones based on the first zone-correspondence information, zone characteristic-quantity information, which is the information indicative of the zone characteristic quantities, and the synthesized characteristic-quantity information, to provide the correspondence information that has been determined at present. The above-described method enables preventing erroneous correspondences between objects and object zones at the event that a plurality of objects are present in an object zones after an object parts or that objects counterchange when intersection of the objects takes place.

In the object-tracking method, the state of tracking includes a stand-alone state, in which only a single object is present in an object zone, a crossover state, in which a plurality of objects are present in a single object zone, or a state of parting that is a transient state through which an object zone parts into a plurality of object zones.

The object-tracking method is preferably developed such that the method generates, as a zone characteristic quantity, at least one of, or one of the combinations of the color histograms, areas, image templates and color histograms normalized with respect to respective areas, of object zones, and seeks the object zones corresponding to the objects from the first zone-correspondence information, and generating, as an object characteristic quantity, at least one of, or one of the combinations of the color histograms, areas, image templates and color histograms normalized with respect to respective areas of the object zones.

The object-tracking method is preferably developed such that the method stores the object-zone information, tracks an object on the basis of the object-zone information, the correspondence information that has been determined and the object-zone information prior to the present to provide a second zone-correspondence information indicative of the correspondence between the object and object zone, and decides the state of tracking an object on the basis of the second zone-correspondence information, the object-zone information and the object-zone information prior to the present to provide the first zone-correspondence information.

The object-tracking method is preferably developed such that the method sorts objects and object zones into a plurality of classes by: grouping the objects, to which the object zones having a common region correspond, to enrol the objects and the corresponding object zones in one class; and for the objects that correspond to the object zones differing from the object zones corresponding to any other objects, enrolling the objects and the corresponding object zone in one class, based on at least one of, or one of combinations of the corresponding relationship between objects and object zones, the distances between object zones, and the duration period for on-parting of object zones calculated from the second zone-correspondence information and the object-zone information; and decides the state of tracking based on the classified class.

The object-tracking method is preferably developed such that the state of tracking includes a state of parting that is a transient state through which a single object zone parts into a plurality of object zones, and the object-tracking method decides that a classified class meets the condition of being in the state of parting if the class includes two or more object zones, and if a class meets the condition of being in the state of parting, decides to be the state of parting on the states of tracking of the objects and object zones included in the class of interest.

The object-tracking method is preferably developed such that if the classified class meets the condition of being in the state of parting and further meets at least one of, or one combination of the conditions that the class includes two or more objects, that the distances between the object zones included in the class exceed a predetermined threshold, and that the continued periods of separation of the object zones included in the class exceed a predetermined threshold, the object-tracking method decides to be a state of parting on the states of tracking of the objects and object zones included in the class. The above-described method enables preventing the positions of an object relative to other objects from being erroneously decided to be in the state of parting.

The object-tracking method is preferably developed such that the state of tracking includes the state of parting and a stand-alone state in which a single object is present in an object zone, and the object-tracking method decides that the states of tracking of the object and object zone are the stand-alone state if the classified class includes a single object and also neither of the states of tracking of the object and the object zone included in the class is the state of parting.

The object-tracking method is preferably developed such that the state of tracking includes the state of parting and the crossover state in which a plurality of objects correspond to a single object zone, and the object-tracking method decides that the states of tracking of the objects and object zone included in the classified class are the crossover state if the class includes two or more objects and neither of the states of tracking of the objects and the object zone included in the class is the state of parting.

The object-tracking method is preferably developed such that the method extracts zone characteristic quantities from the image information, the object-zone information and the first zone-correspondence information to provide the zone characteristic-quantity information, which is the information indicative of the zone characteristic quantities, stores the object characteristic quantities, selects the stored object characteristic quantities to be supplied as required, and updates the stored object characteristic quantities on the basis of the zone characteristic-quantity information, the first zone-correspondence information or the correspondence information that has been determined and the object characteristic quantities generated prior to the present.

The object-tracking method is preferably developed such that the state of tracking includes the state of parting that is a transient state through which an object zone parts into a plurality of object zones, and the object-tracking method includes, into the zone characteristic-quantity information, the information which indicates that there is no need of establishing the corresponding relationship to any objects, for the object zones that are indicated as having the states other than the state of parting while in their tracking states, and excludes the object zones, which are indicated in the zone-correspondence information that there is no need of establishing the corresponding relationship to any objects, from the establishment of corresponding relationship. The method described above allows reducing the amount of calculation for calculating the degrees of similarity.

The object-tracking method is preferably developed such that the state of tracking includes a stand-alone state in which a single object is present in an object zone, and the object-tracking method decides whether or not the state of tracking is the stand-alone state based on the first zone-correspondence information or correspondence information that has been determined, and skips an update of the stored object characteristic quantity if the state of tracking of an object is any of the states other than the stand-alone state. The above-described procedures allow deletion of update processes of unnecessary object characteristic quantities.

The object-tracking method is preferably developed such that the method determines all possible combinations of objects and object zones on the basis of the object characteristic quantities and the first zone-correspondence information, and synthesizes object characteristic quantities to generate synthesized characteristic quantities only for the determined combinations of objects and object zones. In this way, the processes of generating unnecessary synthesized characteristic quantities can be deleted.

The object-tracking method is preferably developed such that the method finds synthesis ratios, which are the coefficients for adjusting the ratios of the object characteristic quantities to be synthesized, and generates synthesized characteristic quantities on the basis of the synthesis ratios and object characteristic quantities. By the procedures described above, it is enabled to correct an error arising from the magnitude of an object when the magnitude of the object in the image space differs from the actual magnitude of the object.

The object-tracking method is preferably developed such that the method receives zone characteristic quantities together with object characteristic quantities, calculates synthesized characteristic quantities for arbitrary synthesis ratios based on the received zone characteristic-quantity information and the object characteristic quantities, and provides the synthesized characteristic quantity corresponding to the highest degree of similarity between the zone characteristic quantity and the calculated synthesized characteristic quantity. Through implementing the above-described procedures, basing on only one synthesized characteristic quantity for each combination of objects and object zone suffices for calculation of a degree of similarity, whereby redundant calculation procedures can be omitted.

The object-tracking method is preferably developed such that the state of tracking includes a state of parting, the state of parting being a transient state through which an object zone parts into a plurality of object zones, and the object-tracking method generates synthesized characteristic quantities only for the object zones indicated as being in the state of parting while in their tracking states. The above-described procedures allow reducing the procedures for generating redundant synthesized characteristic quantities.

The object-tracking method is preferably developed such that the object characteristic quantity includes an area of an object, and the object-tracking method calculates a synthesis ratio, which is a coefficient for adjusting the ratios of the object characteristic quantities to be synthesized, on the basis of the areas of objects and generating a synthesized characteristic quantity from the calculated synthesis ratio and object characteristic quantities. The above-described procedures reduce the amount of calculation for calculating a synthesis ratio.

The object-tracking method is preferably developed such that the synthesis ratio is restricted within a range predetermined on the basis of the variations of the object areas. The above-described procedure enables obtaining a correct synthesis ratio even when the area of an object varies in the image.

The object-tracking method is preferably developed such that the method receives the zone characteristic quantities together with the object characteristic quantities, generates synthesized characteristic quantities within the range of variations in the object areas based of the received zone characteristic quantities and object characteristic quantities, and provides the synthesized characteristic quantity of the highest degree of similarity to the zone characteristic quantity of the object zone of interest. The above-described procedures need provide only one synthesized characteristic quantity for each of the combinations of objects, thereby enabling redundant processing to be deleted.

The object-tracking method is preferably developed such that the object characteristic quantity includes an image template, which describes a shape and/or color of an object, and the object-tracking method decides the back-to-belly relations of the objects on the basis of the image templates and zone characteristic quantities, and synthesizes the image templates based on the decided back-to-belly relations of the objects to obtain a synthesized characteristic quantity. The above-described procedures enable correct calculation of the correspondence relation between an object and an object zone even when the object is partially hidden behind another object.

The object-tracking method is preferably developed such that the method calculates, based on the synthesized characteristic-quantity information, the zone characteristic-quantity information and the first zone-correspondence information, the combination of objects and object zones of the highest degree of similarity from all the possible combinations of objects and object zones that can be associated in corresponding relationship, selects the calculated combination of objects and object zones as the objects and object zone of an optimum correspondence, and generates the optimum-correspondence information that indicates the optimum correspondence relation of the objects and object zone; and determines corresponding relationship between objects and object zones based on the first zone-correspondence information and the optimum-correspondence information and provides the correspondence information that has been determined, which is the information inclusive of the determined corresponding relationship between objects and object zones.

The object-tracking method is preferably developed such that the method calculates a total degree of similarity for all possible combinations of objects and object zones, wherein the total degree of similarity is a sum of the degrees of similarity between characteristic quantities of object zones and synthesized characteristic quantities in each of the combinations, and decides that the combination of the highest total degree of similarity of all the possible combinations is the combination of the highest similarity.

The object-tracking method is preferably developed such that the first zone-correspondence information includes the information about an at-rest/in-motion state that indicates whether an object zone is at rest or in motion, and the object-tracking method excludes, from all the possible combinations of the objects and object zones, the combination of object and object zone indicated as being in the at-rest state by the information about an at-rest/in-motion state. According to the above-described method, it suffices only to calculate the combinations in which the object zones that exhibit the at-rest state in their at-rest/in-motion states do not correspond to any objects, whereby the amount of calculation is reduced.

The object-tracking method is preferably developed such that, if the degrees of combined similarity, obtained from the degrees of similarity of the sets of objects and an object zones that make up the combination decided as a combination of the highest similarity, is equal to or lower than a predetermined threshold, then the object-tracking method selects the combinations of the degrees of combined similarity within a predetermined threshold from the combinations of the degrees of combined similarity ranked as the highest similarity, of all the possible combinations of objects and object zones, includes the corresponding relationship between objects and object zones common to the selected combinations into the optimum-correspondence information as optimum P correspondences, and further includes the information that indicates absence of an optimum correspondence between any object and object zone into the optimum-correspondence information, for the object and object zone in the correspondence relation that is not included in the corresponding relationship of the objects and object zones common to the selected combinations; for the objects not indicated in the optimum-correspondence information that are absent from the optimum corresponding relationship to object zones, provides the information indicating the corresponding relationship between the objects of interest and object zones included in the optimum-correspondence information, as the correspondence information that has been determined; and for the objects indicated in the optimum-correspondence information that are absent from the optimum corresponding relationship to object zones, provides the information indicating the corresponding relationship between the objects of interest and object zones included in the first zone-correspondence information, as the correspondence information that has been determined. According to the above-described process, it is enabled to obviate selection of erroneous correspondences between objects and object zones.

The object-tracking method is preferably developed such that the object-tracking method determines the corresponding relationship between objects and object zones to be identical with those indicated in the optimum-correspondence information only for the object zones indicated as having the state of parting while in their tracking states. The above-described procedure deletes the processing of determining the corresponding relationship between objects and object zones.

The object-tracking method is preferably developed such that the object-tracking method provides the correspondences between objects and object zones included in the first zone-correspondence information as the correspondence information that has been determined only for the object zones indicated as having the state other than the state of parting with their states of tracking. The above-described procedure deletes the processing of determining the corresponding relationship between objects and object zones.

The object-tracking program according to the present invention is an object-tracking program for tracking an object based on image information, the program operating a computer to execute the processes characterized by steps of receiving image information, synthesizing object characteristic quantities that represent characteristic quantities of respective objects included in the received image information and generating a synthesized characteristic quantity; and establishing a correspondence between the objects and an object zone based on the degree of similarity between a characteristic quantity of the object zone and the synthesized characteristic quantity, the object zone being a region that is extracted from the image information and also includes the objects.

According to another aspect of the present invention, the object-tracking program is an object-tracking program that establishes correspondences between objects and object zones included in received image information, and the program is developed to operate a computer to execute processes of: receiving image information; extracting object zones from the received image information and providing the object-zone information inclusive of image information about the object zones; deciding the state of tracking with each object or object zone on the basis of the object-zone information and the correspondence information that has been determined indicating the corresponding relationship of the objects and object zones prior to the present and providing first zone-correspondence information, which indicates the corresponding relationship of the object zones and objects and the states of tracking; generating the zone characteristic quantities, which represent the characteristic quantities of the object zones, and the object characteristic quantities, which represent the characteristic quantities of the objects through the use of the image information, the object-zone information and the first zone-correspondence information; synthesizing characteristic quantities for all required combinations of a plurality of objects to generate each of synthesized characteristic quantities based on the object characteristic quantities and the first zone-correspondence information, and providing synthesized characteristic-quantity information, which is the information including the synthesized characteristic quantities and the corresponding relationship between the objects used for generating synthesized characteristic quantities and the synthesized characteristic quantities; and associating the objects and object zones in corresponding relationship based on the first zone-correspondence information, the zone characteristic-quantity information and the synthesized characteristic-quantity information, and providing the correspondence information that has been determined for the present.

According to a further aspect of the present invention, the object-tracking program is an object-tracking program that establishes correspondences between objects and object zones included in received image information, and the program is developed to operate a computer to execute processes of: receiving image information; deciding the state of tracking with each object or object zone on the basis of the object-zone information and the correspondence information that has been determined indicating the corresponding relationship of the objects and object zones prior to the present and providing first zone-correspondence information, which indicates the corresponding relationship of the object zones and objects and the states of tracking; generating the zone characteristic quantities, which represent the characteristic quantities of the object zones, and the object characteristic quantities, which represent the characteristic quantities of the objects through the use of the image information, the object-zone information and the first zone-correspondence information; and while taking each of objects as a target, deciding the correspondences between the objects and object zones through designating the correspondences between objects and object zones included in the first zone-correspondence information as the correspondences between the objects and object zones, for the objects decided to be in the states other than a state of parting while in their tracking states, the state of parting being a transient state through which an object zone parts into a plurality of object zones; for the objects decided to be in the state of parting while in their tracking states, synthesizing characteristic quantities for all required combinations of a plurality of objects on the basis of the object characteristic quantities and the first zone-correspondence information to generate respective synthesized characteristic quantities; and comparing each of synthesized characteristic quantities with a zone characteristic quantity to associate the objects corresponding to the synthesized characteristic quantity, which has the highest degree of similarity to an object zone, with the object zone of interest to place in corresponding relationship.

The present invention offers the following effects:

According to the present invention, the procedures of synthesizing characteristic quantity of a plurality of objects and calculating the degree of similarity between the objects and an object zone by the use of synthesized synthesizing characteristic quantity enables erroneous establishment of the correspondence relation between objects and object zones to be prevented even when a plurality of objects are present in an object zone after parting of an object takes place or groups of objects are positionally counterchanged when the groups intersect. In particular, in the correspondence-establishment of objects and object zones when a crossover state is dissolved, the present invention enables erroneous establishment of the corresponding relationship between objects and object zones to be prevented; and

allowing for combinations of objects and object zones and calculating a degree of combined similarity for each of the combinations allows overall optimum correspondences to be opted for when objects and object zones are associated in corresponding relationship.

**Brief Description of Drawings**

Fig. 1 is a block diagram illustrating the construction of a conventional object-tracking device;

Fig. 2 is a block diagram illustrating an example of a construction of the object-tracking device of the present invention;

Fig. 3 is a block diagram illustrating an example of a construction of the correspondence establishment section;

Fig. 4 is a flow chart representing an example of the process of the object-tracking device according to the present invention;

Fig.5 is a schematic diagram representing an example of the first zone-correspondence information;

Fig. 6 is a block diagram representing an example of the construction of the state-of-tracking decision section;

Fig. 7 is a schematic diagram representing an example of the second zone-correspondence information;

Fig. 8 is a block diagram representing an example of the construction of the characteristic-quantity generation section;

Fig. 9 is a block diagram representing an example of the construction of the correspondence decision section;

Fig. 10 is a schematic diagram representing an example of a method of synthesizing characteristic quantities through the use of templates;

Fig. 11 is a block diagram representing another example of the construction of the object-tracking device according to the present invention;

Fig. 12 is a block diagram representing a further example of the construction of the object-tracking device according to the present invention;

Fig. 13 is a block diagram representing an example of the construction of the first control section; and

Fig. 14 is a flow chart representing another example of the process of the object-tracking device according to the present invention.

**Best Mode for Carrying Out the Invention**

(The First Working Example of The Invention)

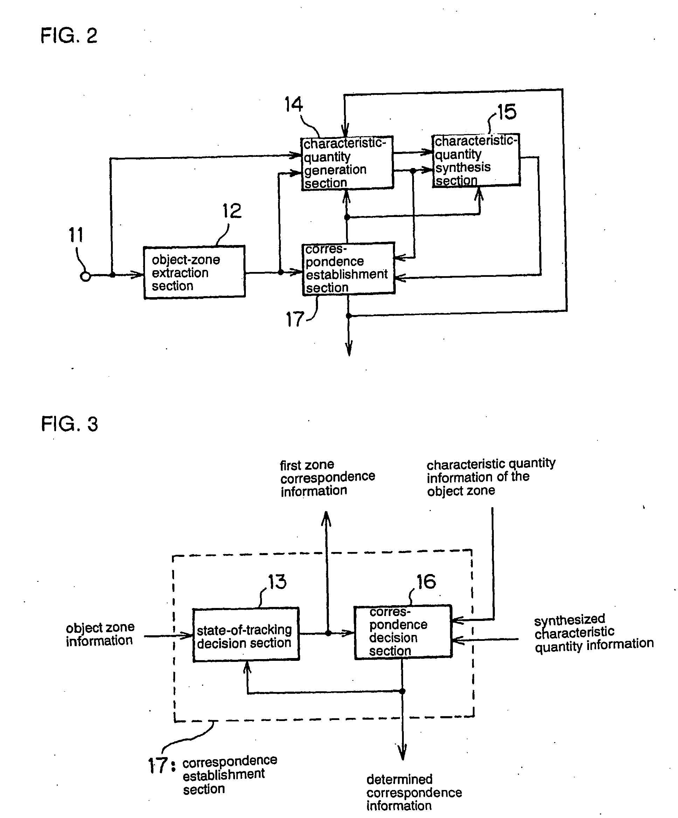

Explanation is next presented with reference to drawings regarding a first embodiment of the present invention. Fig. 2 is a block diagram illustrating an example of the construction of the object-tracking device according to the present invention. The object-tracking device, as shown in Fig. 2, includes: image input terminal 11 that receives image information ever incoming from a video camera or the like; object-zone extraction section 12 that extracts an object zone from the image information supplied to image input terminal 11; characteristic-quantity generation section 14 that creates both a characteristic quantity of an object and a characteristic quantity of an object zone based on the image information supplied to image input terminal 11; characteristic-quantity synthesis section 15 that synthesizes characteristic quantities of a plurality of objects to create a new characteristic quantity; and correspondence establishment section17 that establishes correspondence between an object and an object zone.

In addition, although object-zone extraction section 12, characteristic-quantity generation section 14, characteristic-quantity synthesis section 15 and correspondence establishment section 17 can be realized through hardware, they can be realized through software as well. In other words, object-zone extraction section 12, characteristic-quantity generation section 14, characteristic-quantity synthesis section 15 and correspondence establishment section 17 can be realized by means of the programs stored in a memory to perform their functions described below, and also a CPU that executes procedures in accordance with the programs.

The object-tracking device tracks a material body by continuously taking pictures within a prescribed scope (hereinafter referred to as a tracking scope) through the use of a video camera or the like and recognizing the images of the material body that come out in the taken pictures.

For example, a video camera is immovably fixed and continuously takes pictures within a predetermined scope. In addition, the video camera can be varied in the photo-shooting scope vertically or in the left-to-right direction. Furthermore, an alternative imaging device capable of taking images at determined time periods can be employed in place of continuous image-scanning through the use of a video camera. It is also feasible to employ a device for acquiring image information in the form of static images, such as a digital camera and the like.

An object zone denotes the region in the image that includes an object, wherein an object refers to an image of a material body. The object zone is extracted, for example, by the following steps: acquiring of images of the tracking scope in absence of the object is effected by means of a video camera or the like; object-zone extraction section 12 stores the acquired image information in a background-image storing device as background image information; object-zone extraction section 12 compares the contents of the image information received by image input terminal 11 and background image information stored in the background-image memory in pixel units to calculate the differences of the pixel values and extracts the pixels that have differences in excess of a predetermined threshold (hereinafter the pixels are referred to as object pixels); object-zone extraction section 12 selects all contiguous object pixels from the extracted pixels; object-zone extraction section 12 interconnects the selected object pixels to extract zones; and object-zone extraction section 12 labels zone numbers to the extracted zones and supplies as object zones.

In addition, background-image storing device can store not only a single content of the background image information but also a plurality of contents of the background image information. For example, if the tracking scope is outdoors, background-image storing device may store both the background image information acquired during daylight (hereinafter referred to as a daylight image) and that acquired at night (hereinafter referred to as a night image) to allow employing the daylight image in daylight and the night image at night.

If the characteristic quantity, such as shape or the like, of the target object is known, the object-tracking device may be provided with an object-model storing device adapted to store in advance the information about the shape, color, operation or the like of the object as object-model information, in lieu of the background-image storing device. In this case, object-zone extraction section 12 can collate the received image information with the object model that has been stored in the object-model storing device and extract the zone that matches with the object model as an object zone.

A characteristic quantity is a quantity that serves for establishing a correspondence between an object and an object zone. The characteristic quantity involves two kinds of the quantities, e.g., a characteristic quantity of an object zone (referred to as an object-zone characteristic quantity or a zone characteristic quantity) and a characteristic quantity of an object (referred to as an object characteristic quantity): the zone characteristic quantity represents a characteristic quantity acquired from each of object zones and the object characteristic quantity represents characteristic quantities acquired from an assembly of object zones that constitute an object.

Characteristic-quantity generation section 14 calculates, for example, a color histogram of an object zone, and supplies the calculated color histogram of the object zone as a zone characteristic quantity. Alternatively, the characteristic quantity can be an area of the object zone, an image template or the like, or it can be a color histogram normalized with respect to an area. Further, it can be a combination of two or more characteristic quantities selected from the group of a color histogram, an area, an image template and a color histogram normalized with respect to an area.

The characteristic quantity of an object as well can be represented by any of the color histogram, the area, the image template and the color histogram normalized with respect to an area or a combination of them, because the characteristic quantity of an object is a characteristic quantity composed of an assembly of the characteristic quantities of the object zones that constitutes the object.

Characteristic-quantity generation section 14 calculates the characteristic quantity of an object on the basis of the characteristic quantities of the object zones. The characteristic quantity of an object zone is a characteristic quantity calculated from each object zone, and the characteristic quantity of an object is a characteristic quantity calculated from an assembly of the object zones that constitute the object. Accordingly, if an object corresponds to a single object zone, the characteristic quantity of the object is determined on the basis of the characteristic quantity of the single object zone and if an object is constituted by a plurality of object zones, the characteristic quantity of the object is determined from the synthesis of the characteristic quantities of the object zones.

It is remarked that object-zone extraction section 12 is a specific example (an embodiment) of an object-zone extracting means adapted for extracting an object zone from image information and providing the object zone information that includes the image information about the extracted object zone. Further, characteristic-quantity generation section 14 is a specific example of the characteristic-quantity generating means adapted for generating a characteristic quantity of the object zone and a characteristic quantity of the object, and characteristic-quantity synthesis section 15 is a specific example of characteristic-quantity synthesizing means adapted for generating synthesized characteristic quantities by synthesizing the characteristic quantities for all required combinations of a plurality of objects.

Fig. 3 is a block diagram illustrating an example of construction of correspondence establishment section 17. Correspondence establishment section 17 has state-of-tracking decision section 13 and correspondence decision section 16, as shown in Fig. 3. State-of tracking decision section 13 establishes the correspondence between an object and an object zone and decide the state of tracking. Correspondence decision section 16 confirms the correspondence between the object and object zone on the basis of the state of tracking of the object.

In the above description, the state of tracking refers to the state that represents the relative position of an object with respect to another object such as crossover with and parting from another object. The state of tracking involves, for example, a stand-alone state in which a single object is present in an object zone, a crossover state in which a plurality of objects correspond to a single object zone, and a state of parting or an on-parting state, i.e. a transient state in which an object zone is just on parting into a plurality of object zones. In other words, the state of tracking of the present embodiment includes a stand-alone state, a crossover state and a state of parting. The crossover state generally makes transition to the stand-alone state by way of the state of parting.

In addition, state-of-tracking decision section 13 is a specified example of a state-of-tracking deciding means adapted to decide the sate of tracking with each object or object zone wherein the state of tracking represents a positional relation relative to another object. Correspondence decision section 16 is a specific example of the correspondence establishing means, which is adapted to establish the correspondence between an object and an object zone on the basis of the degree of similarity between a synthesized characteristic quantity and the characteristic quantity of the object zone, which is the zone containing the objects, and also correspondence deciding means, which is adapted to supply the currently correspondence information that has been determined.

In the present embodiment, as described below, the decision of an object in the object zone can be realized with high reliability compared to the case where the synthesis is not performed, by establishing the correspondence between an object and an object zone through synthesizing the characteristic quantity associated with the object zone from characteristic quantities of objects. In particular, when establishing the correspondence between an object and an object zone at the time when the state of crossover ceases, the characteristic quantities of a plurality of objects are synthesized, and the degree of similarity between the characteristic quantities of both the object zone and a plurality of objects, possibly still contained in an object zone after partition of the crossed objects, is calculated through the use of the synthesized characteristic quantity, whereby it is prevented to cause an erroneous correspondence between objects and an object zone even when a plurality of objects are still contained in an object zone after partition of the crossed objects or when two groups of the objects counterchange at the time of intersection (crossover).

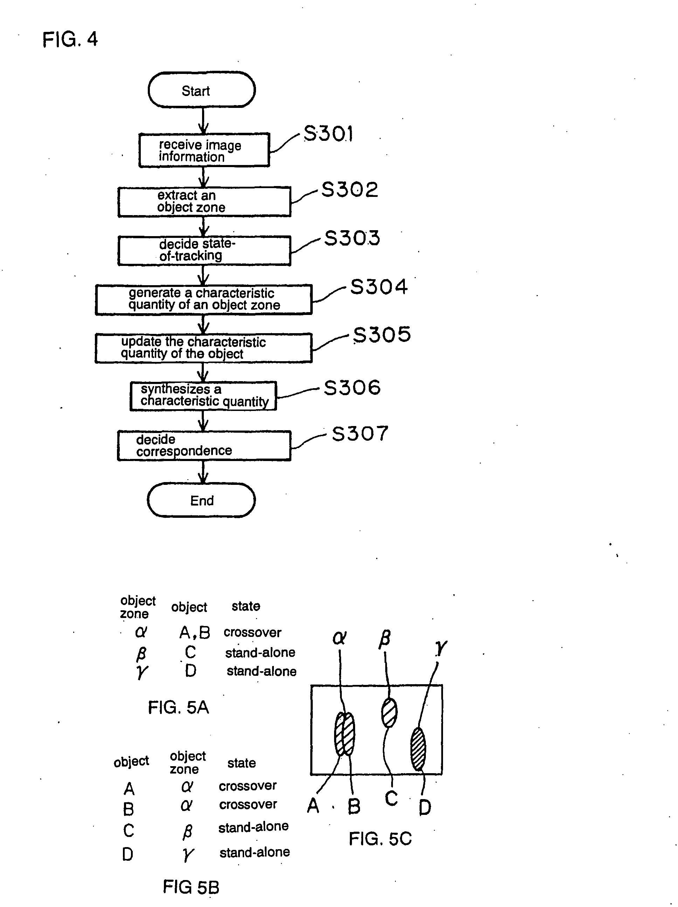

Explanation is next presented regarding the operation of the present embodiment with reference to the flow chart shown in Fig. 4. Fig. 4 is a flow chart illustrating an example of the process implemented by the object-tracking device of the present invention.

Object-zone extraction section 12 receives image information through image input terminal 11 (Step S301). Object-zone extraction section 12 extracts an object zone from the received image information (Step S302). Object-zone extraction section 12 next provides object zone information including the image information about the object zone (object-zone image information).

State-of-tracking decision section 13 stores the object zone information provided by object-zone extraction section 12. State-of-tracking decision section 13 establishes the correspondence between an object and an object zone by tracking the object on the basis of the current object zone information supplied from object-zone extraction section 12, the past object zone information stored in state-of-tracking decision section 13 itself and the past correspondence information that has been determined supplied from correspondence decision section 16; and decides the state of tracking of the object and the object zone with each object or with each object zone. It is supplementarily remarked that the state of tracking is represented as a state of tracking of an object when attention is focused on an object, and is represented as a state of tracking of an object zone when attention is focused on an object zone. When, however, the correspondence between the object and object zone has already been established, both of the representations are equivalent.

In this way, state-of-tracking decision section 13 provides first zone correspondence information as an output (Step S303). The first zone correspondence information is the information that represents the corresponding relationship between object and object zone and the state of tracking (the information representing the correspondence of an object zone and an object to the state of tracking). The correspondence information that has been determined is the information representing the decided corresponding relationship between an object and an object zone decided by correspondence decision section 16. The procedure will be described later, by which correspondence decision section 16 decides a correspondence between the object and an object zone.

Fig. 5 is an explanatory drawing showing an example of the first zone correspondence information. The first zone-correspondence information is the information that represents the correspondence of objects and their states of tracking to object zones as illustrated in Fig. 5A, which is intended to describe a correspondence between object zones α, β and γ and objects A, B, C and D as illustrated in Fig. 5C where it is supposed that the object zone information includes image information about three object zones α, β, γ and also four objects A, B, C and D. The first zone-correspondence information can be the information that represents the correspondence of object zones and their states of tracking to respective objects as illustrated in Fig. 5B.

The tracking of an object is to establish the correspondence of an object to be tracked to an object zone. The establishment of the correspondence can be realized, for example, by setting up the position of an object from an object zone corresponding to a past object, seeking the object zone nearest the set-up position of the object and associating the sought object zone with the object to be tracked. In this case, the position of an object can be assumed to be the center of gravity of an object zone, for example. The method of establishing the correspondence will be described later.

Characteristic-quantity generation section 14 generates a characteristic quantity of an object zone on the basis of the image information received through image input terminal 11 and the object zone information received from object-zone extraction section 12 (Step S304) to supply zone characteristic-quantity information to both characteristic-quantity synthesis section 15 and correspondence establishment section 17. Zone characteristic-quantity information is the information that represents the characteristic quantity of each object zone (a zone characteristic quantity) extracted by object-zone extraction section 12. Characteristic-quantity generation section 14 next decides the characteristic quantity of the object on the basis of the first zone-correspondence information provided from state-of-tracking decision section 13 and the characteristic quantity of the object zone generated in Step S304 to update the characteristic quantity of the stored object (Step S305). Characteristic-quantity generation section 14 next supplies the characteristic quantity of an object in response to the request of characteristic-quantity synthesis section 15.

Characteristic-quantity generation section 14 further updates the characteristic quantity of an object when the first zone-correspondence information provided from state-of-tracking decision section 13 indicates that the state of tracking of the object is a stand-alone state. Characteristic-quantity generation section 14 does not effect the update of the stored characteristic quantity when the state of tracking is a non-stand-alone state (the state other than the stand-alone state), because an exact calculation of the characteristic quantity of an object is unable when the object intersects with another object in the image. The characteristic quantity is updated according to formula (1), for example.

$$H_t = (1-\eta)H_{t-1} + \eta H_{in} \qquad (0 \leq \eta \leq 1) \tag{1}$$

where $H_{in}$ represents a currently observed characteristic quantity of an object (the characteristic quantity obtained from a set of object zones currently constituting an object). $H_t$ and $H_{t-1}$ represent the characteristic quantities of an object stored at times t and t-1, respectively, of those quantities stored in characteristic-quantity generation section 14, $H_t$ representing a characteristic quantity of an object after the update. The symbol η denotes the coefficient of update for the characteristic quantity of an object.

Characteristic-quantity synthesis section 15 synthesizes, by calculation, a characteristic quantity from the characteristic quantities of objects for each of all necessary combinations of a plurality of objects (hereinafter, referred to as a synthesized characteristic quantity), on the basis of both the object characteristic quantities stored in characteristic-quantity generation section 14 and the first zone-correspondence information provided from state-of-tracking decision section 13 (Step S306). In other words, characteristic-quantity synthesis section 15 decides all possible combinations of objects and object zones based on object characteristic quantities provided by characteristic-quantity generation section 14 and the first zone-correspondence information, and generates synthesized characteristic quantities (it is postulated that the synthesized characteristic quantity is a concept that involves an object characteristic quantity of a single object) only for the decided combinations of the objects and object zones. Characteristic-quantity synthesis section 15 supplies the synthesized characteristic-quantity information inclusive of the calculated synthesized characteristic quantities. The synthesized characteristic-quantity information refers to the information that includes the calculated synthesized characteristic quantities and the correspondences between the objects and the synthesized characteristic quantities employed for calculating the synthesized characteristic quantities. Furthermore, characteristic-quantity generation section 14 selects stored characteristic quantities of the objects in response to the requests of characteristic-quantity synthesis section 15 to provide the selected object characteristic quantities to characteristic-quantity synthesis section 15. Characteristic-quantity synthesis section 15 determines the object characteristic quantities to request to characteristic-quantity generation section 14 on the basis of the first zone-correspondence information.

All necessary combinations of a plurality of objects are determined as follows: suppose, for example, the case where objects A, B and C are brought into intersection (i.e., the state of crossover) and then become parted into two object zones α and β (i.e., the state of parting); then, eight possible combinations of the objects and object zones are envisaged, i.e. (α, β) = (ABC, φ), (φ, ABC), (A, BC), (B, CA), (C, AB), (BC, A), (CA, B), and (AB, C). Characteristic-quantity synthesis section 15 generates synthesized characteristic quantities for A, B, C, AB, BC, CA, and ABC. In the above description, (α, β) = (AB, C), for example, represents objects A and B residing in object zone α and object C residing in object zone β. The symbol φ represents no object in the corresponding object zone. The synthesized characteristic-quantity information includes, for example, synthesized characteristic quantity of AB and the information representing the fact that the objects corresponding to the calculated synthesized characteristic-quantity of AB are object A and object B.

Correspondence decision section 16 decides the correspondence between objects and object zones on the basis of zone characteristic-quantity information provided by characteristic-quantity generation section 14, synthesized characteristic-quantity information provided by characteristic-quantity synthesis section 15 and the first zone-correspondence information provided by state-of-tracking decision section 13 (Step S307). Correspondence decision section 16 next supplies the correspondence information that has been determined.

Correspondence decision section 16 decides the correspondence relation between objects and object zone for the objects when the state of tracking of the objects exhibits a state of parting in the first zone-correspondence information supplied from state-of-tracking decision section 13, on the basis of the zone characteristic-quantity information and the synthesized characteristic-quantity information. Alternatively, for the objects of a state of tracking, indicated as a non-state-of-parting state (the state other than the state of parting) in the first zone-correspondence information, correspondence decision section 16 decides the correspondence between objects and object zone to accord with the information representing the correspondence to the object zones included in the first zone-correspondence information supplied from state-of-tracking decision section 13. Correspondence decision section 16 employs the information about the decided correspondence between the objects and object zones as the correspondence information that has been determined.

State-of-tracking decision section 13 decides which of a stand- alone state, a crossover state and a state of parting the states of tracking of the objects exhibit by means of the method described bellow. State-of-tracking decision section 13 classifies overall objects and object zones on the basis of current object-zone information provided from object-zone extraction section 12, the past object-zone information stored in state-of-tracking decision section 13 itself, and the past decided-correspondence information provided by correspondence decision section 16.

If correspondence information that has been determined indicates an established correspondence between object A and object zone α, for example, then state-of-tracking decision section 13 enrolls object A and object zone α in class X. If object B and object zone β are associated into an established correspondence relation, then state-of-tracking decision section 13 enrolls object B and object zone β in class Y other than class X. Furthermore, if object A and object B have an established correspondence to γ as well, then state-of-tracking decision section 13, from the view that there is an established correspondence between object A belonging to class X and object B belonging to class Y, enrolls object zone γ, all elements belonging to class X and all elements belonging to class Y in a same class. For example, classification can be made to enroll object zone γ and both object B and object zone β, which are the elements belonging to class Y, to in class X. Consequently, class Y is deleted, and objects A and B, object zones α, β, and γ belong to class X. The classification can thus be implemented such that within one class, each object and each object zone associate with at least one other object or other object zone in corresponding relationship.

State-of-tracking decision section 13, subsequently to the classification of the objects and object zones, decides which of the stand- alone state, crossover state and state of parting the state of tracking is now taking. State-of-tracking decision section 13 decides that: if a single object element is in the elements of a class, then the state of tracking of the object is the stand-alone state; if two or more object elements are in the elements of a class, and also if only one object-zone element is present in the elements of the class, then the overall state of tracking of the two or more object elements is the crossover state; and if two or more object elements are present in the elements of a class and further two or more object-zone elements are present in the elements of the class, then the overall state of tracking is the state of parting.

Explanation next regards a sequence of procedures from the synthesis of characteristic quantities to the selection of object zones and objects. Correspondence decision section 16 calculates the degree of combined similarity for each of all combinations of objects and object zones and selects the combination of the objects and object zone that has the highest degree of combined similarity. The selection of combination leads to the establishment of correspondence between an object and an object zone. In the above description, the degree of combined similarity is an index indicative of the validness of the combination obtained from the degrees of similarity between the objects and object zones that make up the combination. A high degree of combined similarity represents a valid combination as well as the similarity in the characteristics of the object and object zone that make up the combination. It is to be noted that while a totaled degree of similarity, i.e. the sum of the degrees of similarity between characteristic quantities of object zones and synthesized characteristic quantities for respective combinations, is used as the degree of combined similarity, the degree of combined similarity is not limited to the sum of the degrees of similarity.

For example, in the case when objects A, B and C are brought into intersection (i.e., the state of crossover) and then become parted, the degrees of combined similarity can be calculated from characteristic quantities of object zones and synthesized characteristic quantities for the eight combinations of objects and object zones, $(\alpha, \beta)$ = (ABC, $\phi$), ($\phi$, ABC), (A, BC), (B, CA), (C, AB), (BC, A), (CA, B), and (AB, C). Correspondence decision section 16 decides that the combination of the object and object zone having the highest calculated degree of combined similarity is the object and object zone of the optimum correspondence.

For example, suppose the case where it is determinately impossible to associate object C and object zone $\alpha$ in corresponding relationship as with the case where the objects that potentially correspond to object zone $\alpha$ are A and B while the objects that potentially correspond to object zone $\beta$ are A, B and C. In this case, correspondence decision section 16 may calculate the degrees of combined similarity for only four combinations, i.e. $(\alpha, \beta)$ = (AB, C), ($\phi$, ABC), (A, BC), (B, CA), whereby correspondence decision section 16 can decrease the amount of calculation for the similarity calculation.

In order to calculate the degrees of combined similarity, correspondence decision section 16 calculates the distance between the synthesized characteristic quantity of objects and the characteristic quantity of the object zone (hereinafter referred to as a distance between characteristic quantities or an inter-characteristic-quantity distance) and then calculates a combination distance from the distances between characteristic quantities. Correspondence decision section 16 decides that the degree of combined similarity is high if the calculated combination distance is small, and that the degree of combined similarity is low if the calculated combination distance is large. The combination distance is calculated to be, for example, a sum of the distances between characteristic quantities as shown in expression (2).

$$D_k = \sum_i \left| Hr_i - Hg_{ki} \right|^2 \qquad (2)$$

where i denotes the number of object zone, k the number of the combination of object and object zone, $Hr_i$ the characteristic quantity of the i-th object zone, and $Hg_{ki}$ the synthesized characteristic quantity of the objects corresponding to the i-th object zone in the k-th combination. $D_k$ stands for the combination distance for the k-th combination.

In the above-described eight combinations of objects and object zones, $(\alpha, \beta)$ = (ABC, $\phi$), ($\phi$, ABC), (A, BC), (B, CA), (C, AB), (BC, A), (CA, B), and (AB, C), i = 1 and 2 and k = 1 through 8. Correspondence decision section 16 calculates the combination distance ($D_k$) for each of all possible combinations (in this example, eight combinations) from the distances between the characteristic quantities in each of the sets, each being made up of objects (or an object) and an object zone, (for example, in the combination $(\alpha, \beta)$ = (A, BC), one set being made up of $\alpha$ and A and another set being made up of $\beta$ and BC, and the combination distance ($D_k$) being the sum of the distance between $\alpha$ and A and the distance between $\beta$ and BC); and determines the combination of the minimum combination distance from the possible combinations, as a combination of the highest similarity.

Characteristic-quantity synthesis section 15 preferably calculates the synthesized characteristic quantity depending on a desired synthesis ratio $\varepsilon$. Correspondence decision section 16 calculates the degree of combined similarity on the basis of the synthesized characteristic quantity calculated depending on the synthesis ratio $\varepsilon$ to select the optimum combination of objects (or an object) and an object zone. The synthesis ratio $\varepsilon$ refers to a coefficient for adjusting the ratio of the characteristic quantity of each object contained in an object zone. For example, apparent magnitudes of objects displayed in the image differ in some situations on account of different distances of the photographic subjects from a camera. In such a case, the calculation of the synthesized characteristic quantity through simply summing the characteristic quantities of objects will lead correspondence decision section 16 to decision of an incorrect correspondence between objects or an object and an object zone, because the calculated synthesized characteristic quantity differs from the actual characteristic quantity of the object zone. Correspondence decision section 16 can prevent an incorrect correspondence between objects or an object and an object zone by allowing characteristic-quantity synthesis section 15 to calculate a synthesized characteristic quantity depending on a predetermined synthesis coefficient $\varepsilon$.

When synthesizing characteristic quantities of two objects A and B, for example, characteristic-quantity synthesis section 15 generates a synthesized characteristic quantity according to the formula (3), and correspondence decision section 16 calculates the combination distance according to the formula (4).

$$Hg(\varepsilon) = (1\text{-}\varepsilon)H_A + \varepsilon H_B \qquad (0 \le \varepsilon \le 1) \qquad\qquad (3)$$

$$D_k = \sum_i \cdot \min_\varepsilon \left| Hr_i - Hg_{ki}(\varepsilon) \right|^2 \qquad\qquad (4)$$

Characteristic-quantity synthesis section 15 varies synthesis coefficient $\varepsilon$ from 0 through 1 (for example, from 0 through 1 at intervals of 0.1) and calculates synthesized characteristic quantities on the basis of all values of the varied synthesis coefficient $\varepsilon$. Correspondence decision section 16 selects the synthesized characteristic quantity that minimizes the inter-characteristic-quantity distance between the characteristic quantity of an object zone and the synthesized characteristic quantity of objects with respect to the variation of $\varepsilon$. Correspondence decision section 16 further calculates the combination distance for each combination (k) in accordance with formula (4) on the basis of the selected synthesized characteristic quantity and defines the combination of the objects and the object zone that makes the combination distance minimum as an optimum correspondence.

Although correspondence decision section 16 calculates the inter-characteristic-quantity distance in terms of an L2 norm, any other measure of distance may be used for the calculation of the inter-characteristic quantity if the calculation technique supports the calculation of the degree of similarity. An L2 norm refers to a measure of distance calculated in the form of the sum of squares of differences as shown in formulas (2) and (4).

As described above, the device for tracking an object of the present invention enables continuation of tracking a target object even when, after a plurality of objects intersect and then part, a set of plural objects still exists, or when the combinations of the intersecting objects counterchange immediately before and after the intersection of the objects takes place, by calculating synthesized characteristic quantities of the objects in crossover states; calculating the degrees of similarity between the characteristic quantities of the object zones and the synthesized characteristic quantities; and deciding the corresponding relationship between the objects and object zones based on the calculated degrees of similarities.

Furthermore, the device for tracking an object of the present invention calculates the degrees of similarity between the characteristic quantities of object zones and the synthesized characteristic quantities for all combinations of objects and object zones and selects an optimum combination of the objects and object zones based on the calculated degrees of similarity, thereby allowing selection of an optimum correspondence of overall objects when establishing the correspondence relation between a target object and the zone where the target object exists.

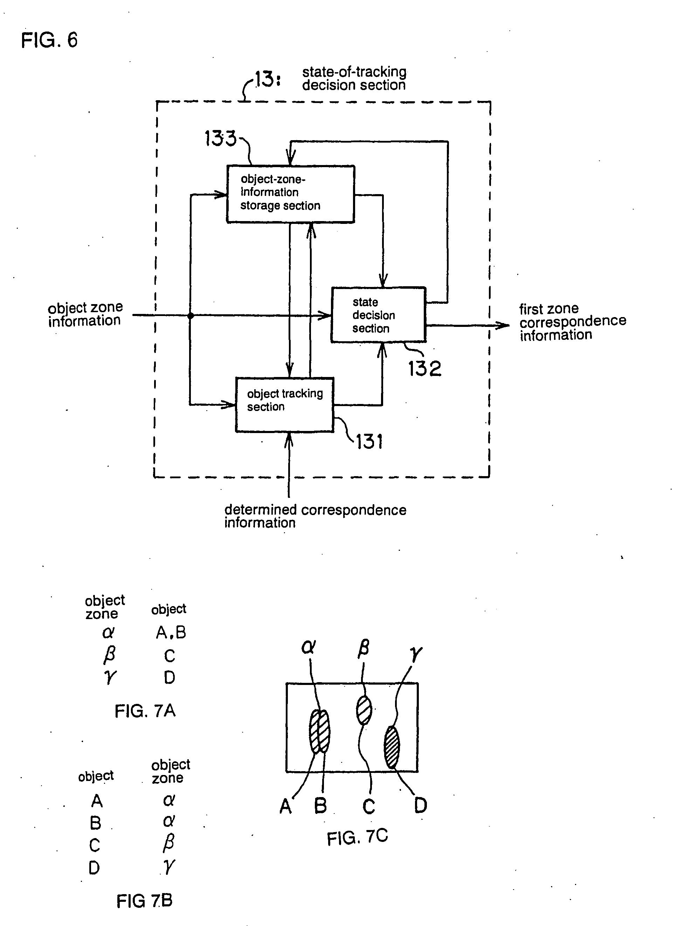

Detailed explanation is next presented regarding the constructions of state-of-tracking decision section 13, characteristic-quantity generation section 14 and correspondence decision section 16. The explanation first regards the construction of state-of-tracking decision section 13. Fig. 6 is a block diagram illustrating an example of the construction of state-of-tracking decision section 13. In the example shown in Fig. 6, state-of-tracking decision section 13 comprises object tracking section 131, state decision section 132 and object-zone-information storage section 133.

Object tracking section 131 is an embodiment of an object tracking means for tracking an object or objects through the use of the object zone information, correspondence information that has been determined and the past object zone information provided from an object-zone-information storing means, to provide a second zone-correspondence information that indicates the corresponding relationship between objects and object zones. Object-zone-information storage section 133 is an embodiment of an object-zone-information storing means for storing the object-zone information and the first zone-correspondence information. State decision section 132 is an embodiment of a state decision means for deciding the state of tracking of an object from the second zone-correspondence information, object-zone information and past object-zone information, to provide the first zone-correspondence information.

Object tracking section 131 tracks objects and decides correspondences between the objects and the object zones on the basis of current object-zone information provided by object-zone extraction section 12, past object-zone information stored in object-zone-information storage section 133 and past correspondence information that has been determined provided by correspondence decision section 16. Object tracking section 131 further generates the second zone-correspondence information and delivers the generated second zone-correspondence information to state decision section 132.

The second zone-correspondence information refers to the information indicative of the corresponding relationship between objects and object zones. Unlike the first zone-correspondence information, the second zone-correspondence information includes no information about a state of tracking. Fig. 7 is an explanatory diagram illustrating an example of the second zone-correspondence information. For example, the second zone-correspondence information is the information that indicates the correspondences between objects and object zones as is shown in Fig. 7A to indicate the correspondences between object zones $\alpha$ $\beta$ $\gamma$ and objects A, B, C and D as shown in Fig. 7C when it is recognized that the object-zone information has image information about three object zones $\alpha$, $\beta$, $\gamma$ and the past correspondence information that has been determined has four objects A, B, C and D. Alternatively, the second zone-correspondence information can be the information that indicates the correspondences between the objects and object zones as shown in Fig. 7B, for example.

State decision section 132 performs the decision of the state of tracking objects on the basis of the object-zone information provided by object-zone extraction section 12 and the second zone-correspondence information provided by object tracking section 131, and supplies the first zone-correspondence information about the basis of the second zone-correspondence information and the decision result.

Object-zone-information storage section 133 stores the object-zone information provided by object-zone extraction section 12. The object-zone information stored in object-zone-information storage section 133 serves as past object-zone information used for generation of the second zone-correspondence information in the next generation cycle.

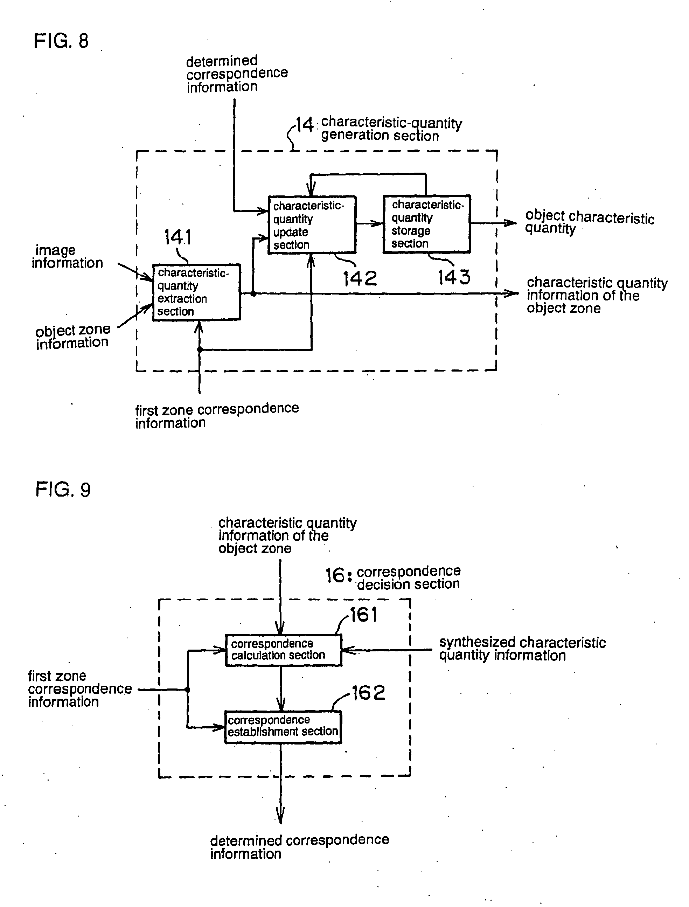

Fig. 8 is a block diagram illustrating an example of the construction of characteristic-quantity generation section 14. In the example shown in Fig. 8, characteristic-quantity generation section 14 comprises characteristic-quantity extraction section 141, characteristic-quantity update section 142 and characteristic-quantity storage section 143.

Characteristic-quantity extraction section 141 is an embodiment of a characteristic-quantity extracting means for extracting a zone characteristic quantity from image information, object-zone information and the first zone-correspondence information to provide the zone characteristic-quantity information that is the information including the zone characteristic quantities. Characteristic-quantity storage section 143 is an embodiment of a characteristic-quantity storing means for selecting the stored object characteristic quantity as required and supplying the selected object characteristic quantity. Characteristic-quantity update section 142 is an embodiment of a characteristic-quantity updating means for updating the object characteristic quantity stored in the characteristic-quantity storing means on the basis of the zone characteristic quantity, the first zone-correspondence information and an object characteristic quantity generated prior to the present.

Characteristic-quantity extraction section 141 calculates a characteristic quantity of each object zone on the basis of the image information received by way of image input terminal 11 and the object-zone information provided by object-zone extraction section 12, and provides, as an output, the zone characteristic-quantity information that includes the calculated characteristic quantities of object zones. The zone characteristic-quantity information provided as an output is received by both characteristic-quantity update section 142 and correspondence decision section 16.

For an object that is indicated in the first zone-correspondence information as being in a stand-alone state in its state of tracking, characteristic-quantity update section 142 updates the characteristic quantity of the object stored in characteristic-quantity storage section 143 based on the zone characteristic-quantity information provided from characteristic-quantity extraction section 141. Characteristic-quantity update section 142 implements no update of the characteristic quantity stored in characteristic-quantity storage section 143 for the object that is indicated in the first zone-correspondence information as being in the state other than the stand-alone state in its the state of tracking. The characteristic quantities of the objects stored by characteristic-quantity storage section 143 are used by characteristic-quantity synthesis section 15 for generating the synthesized characteristic quantities: the stored characteristic quantity of an object is selected in response to the request of characteristic-quantity synthesis section 15 and the selected characteristic quantity of the object is provided to characteristic-quantity synthesis section 15.

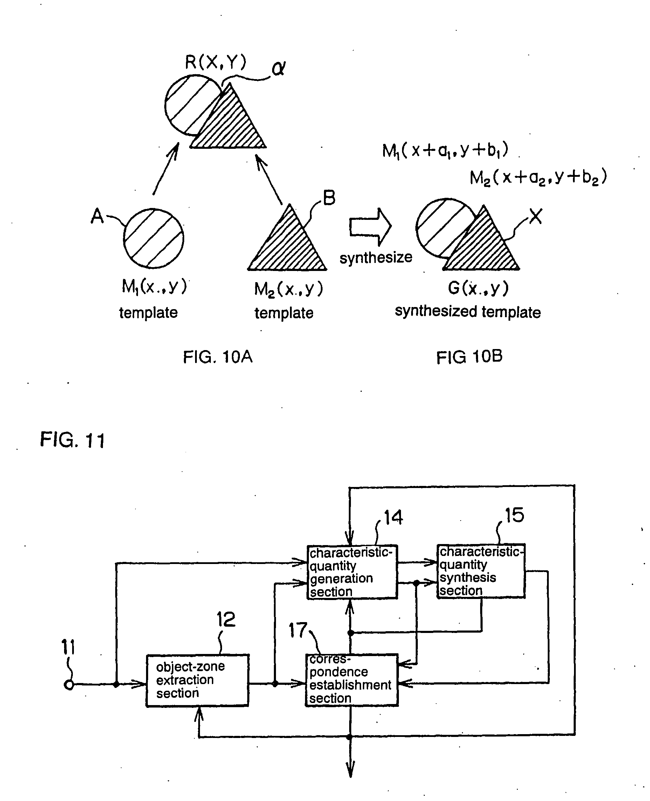

Fig. 9 is a block diagram illustrating an example of the construction of correspondence decision section 16. In the example shown in Fig. 9, correspondence decision section 16 comprises correspondence calculation section 161 and correspondence establishment section 162.

Correspondence calculation section 161 is an embodiment of a correspondence calculation means for generating the optimum correspondence information that represents an optimum correspondence between an object and an object zone. Correspondence establishment section 162 is an embodiment of a correspondence deciding means for providing the correspondence information that has been determined wherein the correspondence information that has been determined is the information including the decided correspondence relation between an object and an object zone.

Correspondence calculation section 161 calculates the degrees of similarities between the characteristic quantities of object zones and synthesized characteristic quantities and further calculates the degrees of combined similarity for all combinations possibly to be placed in corresponding relationship, of the combinations of objects and object zones, on the basis of the zone characteristic-quantity information provided by characteristic-quantity generation section 14, the synthesized characteristic-quantity information provided by characteristic-quantity synthesis section 15, and the first zone-correspondence information provided by state-of-tracking decision section 13. Correspondence calculation section 161 further implements a selection to select as the optimum correspondence the combination of objects and object zones that has the highest degree of combined similarity to generate the optimum correspondence information and provides the optimum correspondence information as an output. In the above description, the optimum correspondence information refers to the information that indicates the optimum corresponding relationship between objects and object zones (the combination of objects and object zones having the highest degree of combined similarity).

Correspondence establishment section 162 determines to designate the information about the correspondence between objects and object zones included in the the optimum correspondence information provided by correspondence calculation section 161, as the information about correspondences between the objects and object zones, if the first zone-correspondence information provided by state-of-tracking decision section 13 indicates that the state of tracking of the objects is the state of parting. For the objects indicated as the objects of the state other than the state of parting, correspondence establishment section 162 establishes the information about the correspondences between the objects of interest and object zones included in the first zone-correspondence information provided by state-of-tracking decision section 13 as the information about correspondences between the objects of interest and object zones.

Correspondence establishment section 162, furthermore, compares the information about objects included in the first zone-correspondence information and the information about established correspondence between objects and object zones, and when there comes out an object zone that is not in correspondence to any of the objects included in the first zone-correspondence information (will be referred to as a not-in-correspondence object zone), creates a new object, establishes a correspondence of the new object to the not-in-correspondence object zone, and supplies the information about the established correspondence between the object and object zone as the correspondence information that has been determined.

Suppose, for example, the case where two objects A and B are present in a completely superposed configuration within a single object zone $\alpha$ so that an object-tracking device recognizes only one object A in object zone $\alpha$. In this situation, when the state of objects A and B makes transition to the state of parting, a new object zone $\beta$ parts from object zone $\alpha$ as a not-in-correspondence object zone. The object-tracking device, however, has not recognized the existence of object B, and, as a result, there comes out an object zone $\beta$ that has no correspondence to any object. For this reason, correspondence establishment section 162 creates new object B and associates object B with object zone $\beta$ in corresponding relationship.

It is to be noted that the constructions illustrated in Figs. 2, 3, 6, 8 and 9 are feasible by means of software. Specifically, the object-tracking device of the present embodiment can be realized by means of an object-tracking program for a computer to implement the following procedures: image input processing to receive image information; object-zone extraction processing for extracting object zones from the input image information to provide object-zone information inclusive of the image information about the object zones; state-of-tracking decision processing for deciding the states of tracking for each of the objects or for each of the object zones from the object-zone information and the correspondence information that has been determined indicative of the corresponding relationship between the object zones and objects prior to the present and providing a first zone-correspondence information indicative of the corresponding relationship between the object zones and objects and the states of tracking; characteristic-quantity generation processing for generating the zone characteristic quantities representative of characteristic quantities of object zones and the object characteristic quantities representative of characteristic quantities of objects based on the image information, the object-zone information and the result of the decision provided by the state-of-tracking deciding means; characteristic-quantity synthesis processing for generating each of synthesized characteristic quantities by synthesizing characteristic quantities for all the required combinations of a plurality of objects based on the object characteristic quantities and the first zone-correspondence information and providing the synthesized characteristic-quantity information that is the information inclusive of the synthesized characteristic quantity and the corresponding relationship between objects and the synthesized characteristic quantities employed for generating the synthesized characteristic quantities; and correspondence establishment processing for establishing the correspondences between objects and object zones based on the object-zone information, the first zone-correspondence information, the zone characteristic-quantity information and the synthesized characteristic-quantity information and supplying the current correspondence information that has been determined.

(Modified Embodiment 1)

State-of-tracking decision section 13 may decide the state of tracking of an object in accordance with the method of decision described below. For example, in the case where, due to superposition of objects (the crossover state), only one object is at first put in correspondence to an object zone, it is decided that the state of tracking is a stand-alone state. When the object zone is parting into a plurality of object zones from the above described state, there exists only one object. As a result, it may not be decided that the state of tracking has made transition from the crossover state to the state of parting but may be possibly decided that the state of tracking remains in a stand-alone state. In order to cope with the situation that one object in a stand-alone state is parting into a plurality of objects, state-of-tracking decision section 13 can decide that the state of tracking should be the state of parting, provided that two or more object-zone elements are included in a class even if there is only a single object element in the class.

The above-described embodiment shows an example of the method of extracting object zones in which object-zone extraction section 12 calculates the differences in pixel values between the image information supplied by way of image input terminal 11 and the background image information that has been acquired in advance. In some cases, when calculating the differences of pixel values, object-zone extraction section 12 cannot properly extract the object zone on account of the object having characteristics similar to those of the background image (for example, the object and the background image resembles each other in color). If the object zone is not properly extracted, state decision section 132 of state-of-tracking decision section 13 might decide by mistake that the state of tracking has made transition to the state of parting. In order to achieve a proper extraction of the object zone in such a case, state decision section 132 preferably copes with the problem through the use of a spatial distance between object zones.

Specifically, for the object zones that are situated as near as within a predetermined threshold of an inter-object-zone distance, state decision section 132 sorts, into the same class, object zones and the objects that are associated with each of the object zones in correspondence relation, when classifying objects and object zones. Suppose, for example, the case where there are objects A and B and object zones $\alpha$ and $\beta$ with object zone $\alpha$ corresponding to object A and object zone $\beta$ corresponding to object B. According to the method explained in the above-described embodiment, state decision section 132 defines two classes: the class to which belong object zone $\alpha$ and object A and the class to which belong object zone $\beta$ and object B. In contrast to the above-described embodiment, state decision section 132 can group all of object zones $\alpha$, $\beta$ and objects A, B together in a single class, provided that the distance between object zone $\alpha$ and object zone $\beta$ is no larger than a predetermined threshold.

The grouping into a single class allows state decision section 132 to decide that the state of tracking remains unchanged in the crossover state even when an object zone parts into two or more object zones in the class that includes two or more objects, provided that the inter-object-zone distance is no larger than a predetermined threshold. State decision section 132 decides that the state of tracking has entered the state of parting at the time when the inter-object-zone distance surpasses the predetermined threshold.

(Modified Embodiment 2)

Furthermore, it is intended that state decision section 132 can cope with the case where a part of an object zone accidentally parts, depending on a period of on-parting duration of the object zones. The duration period for on-parting refers to a duration period during which object zones are in a parting-enabled state, wherein the parting-enabled state of object zones is defined as a state that, when an object zone that was formerly a single object zone parts into the object zones, the parted object zones keep the inter-object-zone distance or distances in excess of a prescribed threshold (can be 0). In this case, state decision section 132 groups the object zones in the process of continued periods of separation shorter than a predetermined threshold and also the objects corresponding to the object zones into the same class to reserve the former state of tracking. When the duration period for on-parting exceeds the threshold, state decision section 132 decides that a state of tracking is the state of parting.

The duration period for on-parting is updated and stored as follows: the duration period for on-parting is stored in object-zone-information storage section 133; object tracking section 131 acquires the continued periods of separation stored in object-zone-information storage section 133, correlates the duration period for on-parting with each of object zones and calculates a new duration period for on-parting; and object tracking section 131 updates the continued periods of separation stored in object-zone-information storage section 133.

Object tracking section 131 makes a correlation between the duration period for on-parting and an object zone as follows: object tracking section 131 makes a correlation between a current object zone and a past object zone on the basis of a current object zone included in the object-zone information, provided from object-zone extraction section 12, and the past correspondence information that has been determined, provided from correspondence decision section 16; and object tracking section 131 correlates the duration period for on-parting, correlated with the past object zone stored in object-zone-information storage section 133, with the current object zone that corresponds to the past object zone of interest. If a plurality of continued periods of separation are correlated, object tracking section 131 correlates the longest of the plurality of continued periods of separation with the object zone. In addition, object tracking section 131 can correlate the shortest of the plurality of continued periods of separation with a current objection zone. Alternatively, object tracking section 131 calculates an average of a plurality of continued periods of separation and correlates the calculated average period with the current object zone.

State decision section 132 acquires continued periods of separation from object-zone-information storage section 133. Furthermore, state decision section 132 decides the state of tracking of an object zone. Further, based on the decision result, state decision section 132 updates continued periods of separation stored in object-zone-information storage section 133. In more specified terms, state decision section 132, when having decided that the state of tracking is a parting-enabled state, updates continued periods of separation stored in object-zone-information storage section 133 on the basis of the duration period for on-parting of interest and the current time. State decision section 132 resets the duration period for on-parting if the state of tracking of the object zone is not the parting-enabled state. Alternatively, parting-startup time representative of the startup time of parting may also be stored in place of storing the duration period for on-parting. In this case, the duration period for on-parting can be obtained by finding the difference between the current time and parting-startup time.

Object tracking section 131 can generate the second zone-correspondence information including the duration period for on-parting rather than storing the duration period for on-parting in object-zone-information storage section 133. In this case, state decision section 132 acquires the duration period for on-parting from the second zone-correspondence information. The direct communication of the duration period for on-parting from object tracking section 131 to state decision section 132 without interposing object-zone-information storage section 133 offers an advantage of allowing reduction in the amount of processing through object-zone-information storage section 133.

Still furthermore, the first embodiment and the modified embodiments 1 and 2 may be employed in combination. In concrete terms, it is also practicable to bring together the objects to which the object zones having a common region correspond, on the basis of the combination of the correspondences between objects and object zones, the distances between object zones and the duration periods of parting of object zones and to group the objects and corresponding object zones into one class. Further, it is also practical to decide that the states of tracking of objects and object zones included in a class are the states of parting, provided that any one of the following conditions or the combination of the following conditions is met: the classified classes meet the condition for the state of parting and further two or more objects are included in each of the classes; the distance between the object zones included in each class exceeds a predetermined threshold; the duration time during the object zones being in the state of parting exceeds a predetermined threshold.

(Modified Embodiment 3)

The object-tracking device can synthesize the characteristic quantities of objects to establish the correspondences between objects and object zones through the following procedures: characteristic-quantity synthesis section 15 acquires not only the characteristic quantities of objects but also the zone characteristic-quantity information from characteristic-quantity generation section 14. Characteristic-quantity synthesis section 15 calculates synthesized characteristic quantities depending on a desired synthesis ratio $\varepsilon$ on the basis of the zone characteristic-quantity information and characteristic quantities of the objects provided by characteristic-quantity generation section 14. Characteristic-quantity synthesis section 15 further provides the synthesized characteristic quantities corresponding to the synthesis ratio $\varepsilon$ that yields the highest degree of similarity between the calculated synthesized characteristic quantity and the characteristic quantity of the object zone included in the zone characteristic-quantity information. Correspondence decision section 16 calculates the degree of similarity between the characteristic quantities of object zones and the synthesized characteristic quantities for each combination of objects and object zones based on the synthesized characteristic quantities provided by characteristic-quantity synthesis section 15 and calculates the degrees of combined similarity.

Since characteristic-quantity synthesis section 15 provides the synthesized characteristic quantity corresponding to the synthesis ratio $\varepsilon$ that yields the highest degree of similarity between objects and an object zones, it suffices for correspondence decision section 16 to calculate the synthesized characteristic quantity on the basis of only one synthesized characteristic quantity for each of the combinations between the objects and object zones. Consequently, correspondence decision section 16 can cut off redundant calculation processing.

(Modified Embodiment 4)

The object-tracking device can establish the correspondences between objects and object zones by synthesizing characteristic quantities through the following method: characteristic-quantity synthesis section 15 acquires not only the characteristic quantities of objects but also the zone characteristic-quantity information and calculates the value of synthesis ratio $\varepsilon$ that minimizes the distance according to formulas (5) through (7), wherein formula (5) is a formula for calculating the distance $f(\varepsilon)$ between a characteristic quantity of an object zone and the synthesized characteristic quantity of the corresponding objects on the basis of the zone-correspondence information and the characteristic quantities of objects provided by characteristic-quantity generation section 14; characteristic-quantity synthesis section 15 calculates the value of synthesis ratio $\varepsilon$ that nulls the function generated by partial-differentiating distance $f(\varepsilon)$ with respect to synthesis ratio $\varepsilon$ as shown in mathematical expressions (6) and (7), i.e. characteristic-quantity synthesis section 15 calculates the value of synthesis ratio $\varepsilon$ that minimize distance $f(\varepsilon)$; characteristic-quantity synthesis section 15 generates a synthesized characteristic quantity according to formula (3) through the use of the calculated synthesis ration $\varepsilon$; and correspondence decision section 16 calculates the degree of similarity on the basis of the generated synthesized characteristic quantity. It is remarked that formulas (5) through (7) are expressed using an example of the synthesized characteristic quantity for objects A and B.

$$f(\varepsilon) = \left| Hr_i - Hg_{ki}(\varepsilon) \right|^2 = \left| (H_A - H_B)\varepsilon + Hr_i - H_A \right|^2 = \sum_n \left\{ (a_n - b_n)\varepsilon + x_n - a_n \right\}^2 \quad (5)$$

$$\frac{\partial f}{\partial \varepsilon} = 2 \sum_n \left\{ (a_n - b_n)\varepsilon + x_n - a_n \right\}(a_n - b_n) \quad (6)$$

$$\varepsilon = \frac{\sum_n (a_n - x_n)}{\sum_n (a_n - b_n)} \quad (7)$$

where $Hg_{ki}$ denotes the synthesized characteristic quantity of characteristic quantity $H_A$ of object A and characteristic quantity $H_B$ of object B, and $Hr_i$ denotes the characteristic quantity of the object zone. If the characteristic quantity is, for example, a color histogram and if the number of the ranks (BIN) of the color histogram is n, then characteristic quantities $H_A$, $H_B$, $Hr_i$ and $Hg_{ki}$ are n-dimensional vectors, respectively and are represented as $H_A = (a_1, a_2,....,a_n)$, $H_B = (b_1, b_2,....b_n)$, $Hr_i = (x_1, x_2,....x_n)$, and $Hg_{ki} = (x_{k1}, x_{k2},....,x_{kn})$.

If synthesis ratio $\varepsilon$ calculated according to formula (7) is either smaller than 0 or larger than 1, then either 0 or 1 that is nearer the value of synthesis ratio $\varepsilon$ calculated in accordance with formula (7) is selected as the value of synthesis ratio $\varepsilon$. Characteristic-quantity synthesis section 15 calculates the synthesized characteristic quantity through the use of calculated synthesis ratio $\varepsilon$. Based on the calculated synthesis ratio $\varepsilon$, correspondence decision section 16 calculates the distance of each combination represented by formula (2) and determines the combination of object and object zone which minimizes the distance of combination as an optimum correspondence.

According to formulas (5), (6) and (7), characteristic-quantity synthesis section 15 can generate a synthesized characteristic quantity using exclusively a specific synthesis coefficient $\varepsilon$. Consequently, it is possible to reduce the amount of calculation for calculating the degree of similarity, in comparison to the case in which synthesized characteristic quantities are generated for various values of the synthesis coefficients $\varepsilon$. It is to be noted that characteristic-quantity synthesis section 15 can generate a synthesized characteristic quantity by the method analogous to the method described above as well in the case when three or more objects superpose. In addition, while characteristic-quantity synthesis section 15 employed the L2 norm as a measure of a distance between characteristic quantities in the embodiment described above, another measure of a distance can be employed.

Furthermore, the object-tracking device can be the device capable of synthesizing characteristic quantities and selecting object zones and objects by the following method: characteristic-quantity synthesis section 15 generates synthesized characteristic quantities using ratios of object areas as synthesis ratios $\varepsilon$; and correspondence decision section 16 calculates the degrees of similarity based on the generated synthesized characteristic quantities. This method is based on the fact that the syntheses ratio at the time of crossover of objects is nearly equal to the ratio of the areas of the objects. Employing the area ratio of objects as a synthesis ratio enables characteristic-quantity synthesis section 15 to cut down the operations for calculating the synthesis ratio. The synthesized characteristic quantity is calculated according to formula (8).

$$Hg = \frac{S_A}{S_A + S_B} H_A + \frac{S_B}{S_A + S_B} H_B \quad (8)$$

where $H_A$ and $H_B$ denote the characteristic quantities of objects A and B, respectively; $S_A$ and $S_B$ denote the areas on image information about objects A and B, respectively; and Hg stands for the synthesized characteristic quantity. Correspondence decision section 16 calculates the sum of the distances represented in formula (2) through the use of the generated synthesized characteristic quantities Hg and determines the combination of objects and object zones that minimizes the sum of the distances, as an optimum correspondence.

For example, characteristic-quantity generation section 14, taking the number of pixels included in an image of an object zone as an area of the object, generates a characteristic quantity inclusive of the area of an object as well as the characteristic quantities inclusive of areas of other objects. Characteristic-quantity storage section 143 in characteristic-quantity generation section 14 stores the area-inclusive characteristic quantities and, when the state of tracking of an object included in the first zone-correspondence information indicates the non-crossover state (the state other than the crossover state), updates the area-inclusive characteristic quantity.

Furthermore, the object-tracking device can synthesize characteristic quantities and establish correspondences between objects and object zones according to the method described below: presuming that the area of each of superposed objects potentially changes in the range from S1 through S2, and characteristic-quantity synthesis section 15 generates synthesized characteristic quantities within the range of the change according to formula (9). Formula (9) is intended to calculate the synthesized characteristic quantity of the characteristic quantity of object A and the characteristic quantity of object B. Correspondence decision section 16 calculates the degree of similarity between the objects and the object zone based on the synthesized characteristic quantity included in the generated synthesized characteristic quantities and having the highest degree of similarity with respect to the characteristic quantity of the object zone, and calculates the degree of combined similarity, according to formula (10).

$$Hg(\Delta s) = \frac{S_A + \Delta s}{S_A + S_B} H_A + \frac{S_B - \Delta s}{S_A + S_B} H_B \qquad (-s_1 \leq \Delta s \leq s_2) \qquad (9)$$

$$D = \sum_i \min_{\Delta s} (Hr_i - Hg_i(\Delta s))^2 \qquad (10)$$

where $\Delta S$ denotes a difference of the area of object A from the area just before objects A and B superpose each other. Calculating of synthesized characteristic quantities allowing for variations of the areas of objects enables characteristic-quantity synthesis section 15 to avoid the selection of synthesis ratio quite different from practice even if the area of the object of interest more or less changes, thereby enabling the generation of the synthesized characteristic quantities on the basis of correct synthesis ratios. As a result, correspondence decision section 16 can decide an optimum correspondence between objects and object zones.

(Modified Embodiment 5)

It is also feasible that characteristic-quantity synthesis section 15 acquires not only the characteristic quantities of objects but also the zone characteristic-quantity information from characteristic-quantity generation section 14 and generates, in a range of the area variation, the synthesized characteristic quantities based on the zone characteristic-quantity information and the characteristic quantities of objects provided by characteristic-quantity generation section 14; provides as an output the synthesized characteristic quantity of the highest degree of similarity to the characteristic quantity of an object zone; and, based on the synthesized characteristic quantity, correspondence decision section 16 finds the degree of combined similarity for each combination of objects and an object zones. In other words, the synthesis ratio $\varepsilon$ can be limited to within a range predetermined on the basis of the range of the area variation of the objects. In this way, characteristic-quantity synthesis section 15 need only provide a single synthesized characteristic quantity for each combination of the objects, whereby redundant processing can be cut off in comparison to the case of generating synthesized characteristic quantities for various values of a synthesis ratio $\varepsilon$.

(Modified Embodiment 6)

Alternatively, characteristic-quantity synthesis section 15 can obtain the synthesized characteristic quantities through the use of templates of objects as characteristic quantities. The template refers to a partial image that is generated by extracting the part of the image corresponding to the material body of interest from a picture and corresponds to the image that expresses the shape and the color. A template is produced by extracting the zone in the picture that corresponds to a material body on the basis of the correspondence relation between the object and the object zone. Alternatively, an image that has modelled in advance such as a reference face image can be employed as a template.

For example, suppose the case where two objects reside in a single object zone. Then characteristic-quantity synthesis section 15 runs templates across the object zone and calculates the degree of similarity between the template and the object zone at each position in the object zone. Characteristic-quantity synthesis section 15 finds the position where the degree of similarity attains a maximum value. Characteristic-quantity synthesis section 15 calculates the degree of similarity according to formulas (11) and (12).

$$d_i(a,b) = \sum_{(x+a,y+b)\in m_i} \left| M_i(x+a,y+b) - R(x,y) \right|^2 \qquad (11)$$

$$d_i = \min_{a,b} d_i(a,b) \qquad (12)$$

where $M_i(x, y)$ represents the value of a pixel of the ith template at coordinates (x, y) and R(x, y) represents the value of a pixel of the object zone at coordinates (x y). Symbol $m_i$ denotes the overall domain of the coordinates of the ith template. Characteristic-quantity synthesis section 15 calculates the sum of squares of the differences of the pixel values between the templates and the object zone, as shown in formula (11), as the distance between their characteristic quantities. It is decided that the degree of similarity between the templates and the object zone is the highest when the distance between their characteristic quantities is the minimum, as represented in formula (12). Characteristic-quantity synthesis section 15 takes the position (a, b) where the degree of similarity between the templates and the object zone is the highest, as the position of the object.

Characteristic-quantity synthesis section 15 next decides the relation in the back-to-belly direction (the back/belly relation) of the superposed objects (the objects in the crossover state) based on the degree of similarity between the template and the object zone. Characteristic-quantity synthesis section 15 decides that the template of a higher degree of similarity to the object zone covers the template of a lower degree of similarity to the object zone. Characteristic-quantity synthesis section 15 then generates a synthesized template that corresponds to a synthesized characteristic quantity by synthesizing the templates. As described above, characteristic-quantity synthesis section 15 can decide the back/belly relation of the respective objects on the basis of the characteristic quantities of the image templates and object zone and calculates a synthesized characteristic quantity by synthesizing the image templates on the basis of the decided back/belly relation of the objects.

Alternatively, characteristic-quantity synthesis section 15 can select the template that has the highest of the respective highest degrees of similarity to the object zone of interest and decide that the selected template covers the unselected templates. It can be intended in this case that the region where the object zone and the selected template (the template in the case where the degree of similarity attains the highest value) overlap is excluded from the object zone of interest and, on the basis of the remaining object zone and unselected templates, operations are repeatedly carried out for the calculation of the degrees of similarity between the templates and the object zone, the selection of the template of the highest degree of similarity, the calculation of the position of the template that is of the highest degree of similarity, and the decision of the covering template.

Fig. 10 is an explanatory diagram illustrating the concept of generating synthesized characteristic quantity using templates. As shown in Fig. 10A, characteristic-quantity synthesis section 15 operates on templates A and B to scan object zone $\alpha$. Characteristic-quantity synthesis section 15 can decide that template B covers template A in an overlapping configuration, because the highest degree of similarity between template B and object zone $\alpha$ is higher than that between template A and object zone $\alpha$. As shown in Fig. 10B, characteristic-quantity synthesis section 15 synthesizes template A and template B at the respective positions where each of the templates configures the highest degree of similarity to the object zone $\alpha$, thereby generating synthesized template X. Characteristic-quantity synthesis section 15, when generating synthesized template X, performs the synthesizing operation using the value of the characteristic quantity of template B for the portion where template B overlaps template A. For supplements, the coordinates $(a_1, b_1)$ stand for the position where the degree of similarity between template A and the object zone is the highest, the coordinates $(a_2, b_2)$ standing for the position where the degree of similarity between template B and the object zone is the highest.

Correspondence decision section 16 calculates the degree of similarity between the characteristic quantity of the object zone and the synthesized characteristic quantity based on the color histogram of the synthesized template according to formula (2) and can calculate the degree of combined similarity. Alternatively, correspondence decision section 16 can, analogously to formula (12), calculate the degree of similarity between the characteristic quantity of the object zone and the synthesized characteristic quantity through collating the object zone and the synthesized template, thereby calculating the degree of combined similarity. Employing templates enables the correct calculation of the correspondence relation between objects and an object zone even if an object is partially hidden behind another object.

(Modified Embodiment 7)

In each of above-described methods, when establishing the correspondence between objects and object zones, the case has sometimes occurred that the establishment of the correspondence between objects and the object zones is necessarily processed by correspondence decision section 16 even when the degree of the combined similarity is low, resulting in an incorrect correspondence between the objects and the object zones. In view of this problem, correspondence decision section 16 can be intended not to establish the correspondence between objects and object zones, if the degree of the combined similarity for an optimum combination (i.e., the degree of the combined similarity for the combination of the highest degree of combined similarity) is low. Correspondence calculation section 161, in such a case, decides that, if the degree of the combined similarity for the optimum combination of objects and object zones is equal to or smaller than a predetermined threshold, there are no optimum object zones corresponding to the objects that constitute the combination. Correspondence calculation section 161 then provides the optimum correspondence information inclusive of the information indicating the absence of the optimum correspondence between the objects and the object zones. When the optimum correspondence information includes the information indicating the absence of the optimum object zones corresponding to the objects, correspondence establishment section 162 decides, for the objects of interest, to designate the information indicating the correspondence between objects and object zones included in the first zone-correspondence information as is, as the correspondence between the objects and the object zones and supplies the information as correspondence information that has been determined. If this is not the case, the information indicating the corresponding relationship between objects and object zones included in the optimum correspondence information is supplied as correspondence information that has been determined. Suppose, for example, the case where correspondence calculation section 161 takes $(\alpha, \beta) = (A, BC)$ as an optimum combination. Then correspondence calculation section 161 calculates the degree of combined similarity from the degree of similarity of the set made up of $\alpha$ and A and also the degree of similarity of the set made up of $\beta$ and BC and decides whether the degrees of combined similarity are no larger than a predetermined threshold. If the degree of combined similarity is equal or smaller than the threshold, correspondence establishment section 162 decides to designate the information about the corresponding relationship between object A, object B and object C and object zones $\alpha$ and $\beta$ included in the first zone-correspondence information as is, as the correspondence between object A, object B and object C and the object zones.

(Modified Embodiment 8)

In each of above-described methods, when establishing the correspondence between objects and object zones, the case has sometimes occurred that the establishment of the correspondences between objects and the object zones is necessarily processed by correspondence decision section 16 even when the degree of the combined similarity is low, entailing an incorrect establishment of the corresponding relationship between the objects and the object zones. In view of this problem, correspondence decision section 16 can be intended not to establish any correspondences between objects and object zones, if the degree of the combined similarity for an optimum combination (i.e., the degree of the combined similarity for the combination of the highest degree of combined similarity) is low. Correspondence calculation section 161, in such a case, decides that, if the degree of the set similarity (the degree of similarity of a set made up of objects or an object and an object zone) for the optimum combination of objects and object zones is equal to or smaller than a predetermined threshold, there are no optimum object zones corresponding to the objects. Correspondence calculation section 161 then provides the optimum correspondence information inclusive of the information indicating the absence of the optimum correspondence between the objects and the object zones. When the optimum correspondence information includes the information indicating the absence of the optimum object zones corresponding to the objects, correspondence establishment section 162 decides to designate, for the objects of interest, the information indicating the corresponding relationship between objects and object zones included in the first zone-correspondence information as is, as the corresponding relationship between the objects and the object zones and supplies the information as correspondence information that has been determined. If it is not the case, correspondence establishment section 162 supplies the information indicating the corresponding relationship between objects and object zones included in the optimum correspondence information as correspondence information that has been determined. Suppose, for example, the case where correspondence calculation section 161 takes $(\alpha, \beta) = (A, BC)$ as an optimum combination. Then, correspondence calculation section 161 decides whether or not the degree of similarity of the set made up of $\alpha$ and A and also the degree of similarity of the set made up of $\beta$ and BC are individually no higher than a predetermined threshold. If the degree of similarity between $\alpha$ and A is equal to or lower than the predetermined threshold, correspondence establishment section 162 decides to designate the information indicating the correspondence between object A and the object zone of interest included in the first zone-correspondence information as is, as the correspondence relation between object A and the object zone.

(Modified Embodiment 9)

It can be intended that correspondence calculation section 161 establishes a correspondence to an object zone only for definitely discriminable objects. In this case, correspondence calculation section 161 ranks all combinations of objects and object zones in the order of height in the degree of combined similarity. If the differences between the degrees of combined similarity of the combinations ranked in the upper orders are small (for example, equal to or smaller than a predetermined threshold) and besides, if common objects and object zones (or an object and an object zone) are present in the upper-order combinations, correspondence calculation section 161 deems exclusively the combinations of the common objects and object zones as being of an optimum correspondence. Correspondence calculation section 161 provides the optimum correspondence information that includes the information about exclusively the combinations of the common objects and object zones. This implies that the optimum correspondence information includes the information that indicates the absence of any combination of an optimum correspondence in the other objects and object zones.

Suppose, for example, the correspondences between objects A, B and C and object zones $\alpha$, $\beta$ and $\gamma$ in which the combinations ranked in the upper three in the order of the degree of combined similarity are $(\alpha, \beta, \gamma) = (A, B, C)$, $(AB, \phi, C)$, and $(B, A, C)$. In this example, correspondence calculation section 161 presumes exclusively the combination of object C and object zone $\gamma$ as an optimum combination, and provides the optimum correspondence information that includes the information indicative of exclusively the combination of object C and object zone $\gamma$ as an optimum combination. In addition, this method can be combined with modified embodiment 7: In the case, where, for optimum combinations of the objects and object zones, the degrees of similarity of the sets of objects and an object zone each are equal to or lower than a predetermined threshold, correspondence calculation section 161 can include the information, which indicates the absence of any combination of an optimum correspondence in the other objects and object zones, into the optimum correspondence information, provided that the difference between the degrees of combined similarity of the upper-order combinations is small (for example, equal to or smaller than a predetermined threshold) and besides, that there is no object and object zone common to the upper-order combinations.

For the objects which the optimum-correspondence information indicates as having no optimum corresponding relationship, correspondence establishment section 162 decides to designate the corresponding relationship between objects and object zones, included in the first zone-correspondence information, as the corresponding relationship between objects and object zones .

As described above, for the combinations having the degrees of combined similarity ranging from the highest degree of combined similarity to within a predetermined threshold, of all the possible combinations, correspondence calculation section 161 selects, from the combinations ranked in the higher degrees of combined similarity, the combinations having the degrees of combined similarity within a prescribed threshold, includes the corresponding relationship between objects and object zones commonly existing in the selected combinations, into the optimum-correspondence information as optimum correspondences, and for the objects and object zones that are not included in the corresponding relationship between said commonly existing objects and object zones, correspondence calculation section 161 includes the information, which indicates absence of an optimum correspondence between objects and an object zone, into the optimum-correspondence information. It can be intended that, for the objects not indicated in the optimum-correspondence information as having no optimum correspondences to object zones, correspondence establishment section 162 provides the information indicative of the correspondences between objects and object zones included in the optimum-correspondence information as the correspondence information that has been determined; and for the objects that are indicated in the optimum-correspondence information as having no optimum correspondence to object zones, correspondence establishment section 162 provides the information indicative of the corresponding relationship between objects and object zones included in the first zone-correspondence information as the correspondence information that has been determined.

(Modified Embodiment 10)

Further, in the above-described respective methods, characteristic-quantity generation section 14 can modify, depending on the state of tracking, the information included in the zone characteristic-quantity information that is to be supplied to correspondence decision section 16. In this case, for example, for the object zone that is indicated as being in the state of parting in its state of tracking by the first zone-correspondence information supplied from state-of-tracking decision section 13, the characteristic quantities of the object zones of interest is included in the zone characteristic-quantity information. Alternatively, for the object zones indicated as being in the state of tracking other than the state of parting, the zone characteristic-quantity information need not include, while can include, the characteristic quantities of the object zones of interest, because correspondence decision section 16 does not necessitate the characteristic quantities of the object zones. Still alternatively, the zone characteristic-quantity information can include the information indicating that there is no necessity of establishing correspondence, in place of including no characteristic quantities. Correspondence decision section 16 excludes the object zones indicated in the zone characteristic-quantity information as not necessitate establishing the correspondence to objects, from the establishment of correspondence, thereby decreasing an amount of calculation of correspondence decision section 16.

(Modified Embodiment 11)

Characteristic-quantity synthesis section 15 is not intended to acquire the characteristic quantities of all the objects stored in characteristic-quantity storage section 143 but is intended to acquire the characteristic quantities of the objects stored in characteristic-quantity storage section 143 only if the state of tracking of the objects is indicated as the state of parting in the first zone-correspondence information provided by state-of-tracking decision section 13, whereby it is enabled to omit the redundant processing of acquiring the object characteristic quantities that are not required to generate the synthesized characteristic quantities and to accelerate the processing of characteristic-quantity synthesis section 15 to generate the synthesized characteristic quantities.

(Modified Embodiment 12)

In the above-described methods, the first zone-correspondence information is identical with the correspondence information that has been determined for the objects in the states of tracking other than the state of parting. Accordingly, the content of the information included in the correspondence information that has been determined, fed back to state-of-tracking decision section 13 from correspondence decision section 16 can be restricted only to the corresponding relationship of the objects in the state of parting. In this case, for the other objects, state-of-tracking decision section 13 employs, in place of the correspondence information that has been determined, the corresponding relationship obtained by state-of-tracking decision section 13 itself in the past (included in the first zone-correspondence information). This approach as well enables realizing the device equivalent to the object-tracking devices that use the above-described method.

(Modified Embodiment 13)

In each of the above-described methods, while characteristic-quantity update section 142 updates characteristic quantities of objects on the basis of the first zone-correspondence information, characteristic-quantity update section 142 can update characteristic quantities of objects on the basis of the correspondence information that has been determined in place of the first zone-correspondence information. In this case, characteristic-quantity extraction section 141 includes the characteristic quantities of the object zones, which are in the state of tracking indicated in the first zone-correspondence information as being the stand-alone state or the state of parting, into the zone characteristic-quantity information to be supplied to characteristic-quantity update section 142. Characteristic-quantity update section 142 decides the states of tracking of objects based on the correspondence information that has been determined provided by correspondence decision section 16 after correspondence decision section 16 determines the correspondences between objects and object zones. Characteristic-quantity update section 142 then, exclusively for the objects being in the stand-alone state in their the state of tracking, updates the characteristic quantities of the objects stored in characteristic-quantity storage section 143 based on the characteristic-quantity information about object zones provided by characteristic-quantity extraction section 141. This approach as well allows realizing the device equivalent to the object-tracking device using any of the above-described methods.

(Modified Embodiment 14)

Correspondence decision section 16 can decide the states of tracking of objects rather than characteristic-quantity update section 142 decides the states of tracking of objects on the basis of the correspondence information that has been determined, wherein correspondence decision section 16 provides the correspondence information that has been determined that includes the information about the decided states of tracking of objects, thereby allowing characteristic-quantity update section 142 to omit the processing for deciding the states of tracking of the objects. This approach as well enables the realization of the device equivalent to the object-tracking device using any of the above-described methods.

(Modified Embodiment 15)

Characteristic-quantity update section 142 can update the characteristic quantities of objects stored in characteristic-quantity storage section 143 based on not exclusively the first zone-correspondence information but both the first zone-correspondence information and the correspondence information that has been determined. In this case, characteristic-quantity extraction section 141 includes the characteristic quantities of the object zones that are indicated in the first zone-correspondence information as having the stand-alone state or the state of parting, into the zone characteristic-quantity information to be provided to characteristic-quantity update section 142. Exclusively about the objects that are indicated as having the stand-alone state while in their tracking states, characteristic-quantity update section 142 updates the characteristic quantities of the objects stored in characteristic-quantity storage section 143 on the basis of both the zone characteristic-quantity information supplied from characteristic-quantity extraction section 141 and the first zone-correspondence information supplied from state-of-tracking decision section 13. Characteristic-quantity update section 142 decides the states of tracking of the objects based on the correspondence information that has been determined supplied from correspondence decision section 16 after correspondence decision section 16 decides the correspondences between objects and object zones, and exclusively about the objects of the state of tracking that has made transition from the state of parting to the stand-alone state, updates the characteristic quantities of the objects stored in characteristic-quantity storage section 143 based on the zone characteristic-quantity information supplied from characteristic-quantity extraction section 141.

In this case as well, correspondence decision section 16 can decide the states of tracking of objects rather than characteristic-quantity update section 142 decides the states of tracking of objects on the basis of the correspondence information that has been determined. Correspondence decision section 16 further provides the correspondence information that has been determined inclusive of the information about the decided states of tracking of the objects. This approach allows characteristic-quantity update section 142 to omit the processing of deciding the states of tracking of the objects.

(The Second Working Example of The Invention)

Explanation is next presented regarding the second working example of the invention with reference to the drawings. The first zone-correspondence information in the present working example includes the at-rest/in-motion information that indicates whether an object zone is at rest or in motion. An at-rest/in-motion state includes an at-rest state and an in-motion state, wherein the at-rest state denotes the state in which the object zone is at rest and the in-motion state denotes the state in which the object zone is in motion. The object-tracking device treats the object zone that is in an at-rest state in its at-rest/in-motion state as a background.

The first zone-correspondence information includes background-update information indicative of whether or not an object zone is treated as a background. The background-update information is represented by means of, for example, a binary representation of "0" and "1": if the background-update information about an object zone is "1", then the object zone is treated as a background; and if the background-update information about an object zone is "0", then the object zone is not treated as a background.

If the object-tracking device is intended for tracking a human body, for example, the object-tracking device can take exclusively a human body as a tracking target by presuming static objects separated from the human body as a background. As a method of discriminating between a state of at-rest and a state in-motion, a method can be employed , for example, in which, an object zone of the extracted object zones is decided as being in a static state (an at-rest state) if the object zone keeps the static state for a duration time (hereinafter referred to as a static duration period) longer than a prescribed threshold, and the at-rest./in-motion state of the object zone is decided to be an in-motion state if the static duration period is shorter than the prescribed threshold.

Through Introduction of background-update information, the object-tracking device can deem the object zones, which have been regarded as a background, as needless to track and exclude from the tracking target. In this way, the object-tracking device can track exclusively the objects that are required to track as tracking targets. Specifically, it can be intended to exclude the combinations of objects and object zones that are indicated by the at-rest/in-motion information as taking the at-rest state, from all the possible combinations. For example, the object-tracking device, in treating object zones, deems the object zones as a part of the background only if the object zones exceed a prescribed threshold in their static duration periods, keep the at-rest state in their at-rest/in-motion states and further are decided in accordance with the correspondence information that has been determined as having no corresponding objects. In addition, the setting up of a threshold value for discriminating the background prevents the object-tracking device from faultily deeming the object zone as a background in the case where a target object exists, even when the object-tracking device fails in tracking of the object.

Fig. 11 is a block diagram illustrating a second working example of the object-tracking device according to the present invention. Although the constituent elements of the object-tracking device are the same as with the case of the first working example as Fig. 11 shows, object-zone extraction section 12 extracts object zones on the basis of not only the image information provided by way of image input terminal 11 but also the correspondence information that has been determined provided by correspondence establishment section 17. In the above device, the construction of correspondence establishment section 17 is the same as that shown in Fig. 3, the construction of state-of-tracking decision section 13 is the same as that shown in Fig. 6, the construction of characteristic-quantity generation section 14 is the same as that shown in Fig. 8 and the construction of correspondence decision section 16 is the same as that shown in Fig. 9.

Object-zone-information storage section 133 stores static duration periods of object zones. Object tracking section 131 associates the past static duration periods of object zones stored in object-zone-information storage section 133 with the current object zones and calculates the static duration periods at present. Object-zone-information storage section 133 stores the calculated current static duration periods of the object zones.

In calculating the latest static duration periods, a case may be envisaged in which a plurality of the past static duration periods can be associated with an object zone. When a plurality of past static duration periods exist, object tracking section 131 selects the longest of the past static duration periods that are now in existence and associates the selected static duration period with the current static duration period. Alternatively, it is permissible to select the shortest static duration period to associate it with the current static duration period, or to calculate an average time of the static duration periods to associate the calculated average time with the current static duration period.

Object tracking section 131 calculates the current static duration periods by performing the update of the static duration periods according to the following procedures: object tracking section 131 finds the difference vector between the center of gravity of a past object zone and that of the latest object zone for each of the object zones; if the magnitude of difference vector is equal to or below a predetermined threshold, then object tracking section 131 decides that the object is at rest and updates the static duration period; and if the magnitude of the difference vector exceeds the predetermined threshold, then object tracking section 131 decides that the object zone is in motion and resets the static duration period.

State decision section 132 decides the at-rest/in-motion states of object zones based on the static duration periods of object zones stored in object-zone-information storage section 133. State decision section 132 provides the first zone-correspondence information inclusive of static duration periods of object zones and the information about the at-rest/in-motion states. In addition, object-zone-information storage section 133 updates the at-rest/in-motion states of object zones on the basis of the decision of state decision section 132.

In the first embodiment, correspondence calculation section 161 calculates the degrees of similarity between the characteristic quantities of object zones and synthesized characteristic quantities for all the combinations of the objects and object zones potentially to be associated in corresponding relationship (all the possible combinations), involved in the combinations of the objects and object zones. In the present embodiment, however, the calculation is made only of the combinations of the objects and object zones in which the object zones at rest in their at-rest/in motion state are not associated with any objects in corresponding relationship. In other words, the combinations between the object zones that are at rest in their at-rest/in motion state and the corresponding objects are excluded from all the possible combination, whereby correspondence calculation section 161 can decrease the amount of calculation for calculating the degrees of similarity between objects and object zones.

Correspondence establishment section 162 provides the correspondence information that has been determined including the information about the static duration periods of the object zones calculated by object tracking section 131. Correspondence establishment section 162 decides whether or not the object zone of interest is deemed as the background based on both the information about the static duration period and the information about the at-rest/in-motion state. Specifically, the object zone is decided to deem as the background if static duration period exceeds a predetermined threshold; the at-rest/in-motion state is an at-rest state; and there is no object associated in corresponding relationship on the basis of the correspondence information that has been determined. If an object zone is deemed as a background, then correspondence establishment section 162 incorporates the background-update information, which indicates the update of the background within a region of the object zone, into the correspondence information that has been determined.

If the correspondence information that has been determined includes the background-update information indicative of updating the background within a region of the object zone, then object-zone extraction section 12 updates the image of the background within the region of the object zone of interest on the basis of the object-zone information, the image information supplied by way of image input terminal 11 and the correspondence information that has been determined provided by correspondence establishment section 17. Object-zone extraction section 12 updates the image of the background according to formula (13).

$$B_t(x,y) - (1\text{-}\mu)B_{t\text{-}1}(x,y) + \mu I_{in} \qquad (0 \leq \mu \leq 1) \qquad (13)$$

where (x, y) denotes the coordinates of a pixel and $I_{t0}(x, y)$ stands for the pixel value of the image information at coordinates (x, y). $B_t(x, y)$ and $B_{t\text{-}1}(x, y)$ denote the pixel values of the background images at coordinates (x, y) at times t, and t-1, respectively. Further, $\mu$ represents an update coefficient.

As described above, the discrimination between an object and the background is enabled by providing the first zone-correspondence information that includes the static duration period and at-rest/in-motion state of an object zone, from state decision section 132 and by providing correspondence information that has been determined that includes the background-update information, from correspondence establishment section 17. Furthermore, the inclusion of the at-rest/in-motion state information in the first zone-correspondence information allows the object-tracking device to exclude the objects at rest from the candidate objects to be brought into corresponding relationship to the object zones of interest, whereby it is enabled that the amount of the calculation to be carried out by correspondence calculation section 161 for calculating the degrees of similarity is decreased, and furthermore, only objects in motion are tracked.

Alternatively, object tracking section 131 can provide the second zone-correspondence information inclusive of the information about static duration periods to state decision section 132, rather than object-zone-information storage section 133 stores static duration periods and state decision section 132 acquires the static duration periods stored in object-zone-information storage section 133. This strategy allows state decision section 132 to acquire the information about static duration periods without any intervention of object-zone-information storage section 133.

For supplement, for the object zones that are indicated as being in the state of parting in their state of tracking and also indicated as being at rest in their at-rest/in-motion state, characteristic-quantity extraction section 141 may include but need not include any characteristic quantities of the object zones in the zone characteristic-quantity information, because correspondence calculation section 161 does not need the characteristic quantities of the object zones. Alternatively, the zone characteristic-quantity information can include the information indicating that there is no need for any correspondence establishment, in place of including no characteristic quantities of the object zones. In this way, the redundancy of providing unnecessary characteristic quantities can be saved.

(The Third Embodiment of The Invention)

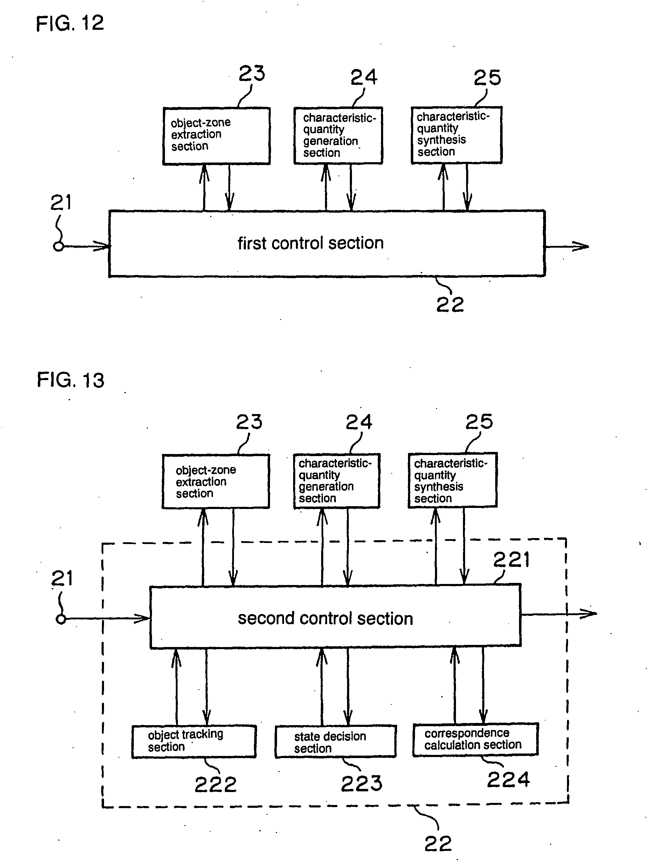

Explanation is next presented regarding a third embodiment of the present invention referring to drawings. Fig. 12 is a block diagram illustrating a third working example of the object-tracking device of the present invention. As illustrated in Fig. 12, the object-tracking device comprises image input terminal 21, first control section 22, object-zone extraction section 23, characteristic-quantity generation section 24 and characteristic-quantity synthesis section 25.

First control section 22 is connected to image input terminal 21, object-zone extraction section 23, characteristic-quantity generation section 24 and characteristic-quantity synthesis section 25 to control these sections. First control section 22, in addition, performs the correspondence establishment between objects and object zones (associates objects and object zones in corresponding relationship) and provides the correspondence information that has been determined.

Object-zone extraction section 23 extracts object zones on the basis of the image information provided from first control section 22 and supplies object-zone information that includes the image information about object zones numbered with zone numbers, to first control section 22.

Characteristic-quantity generation section 24 extracts the characteristic quantities of object zones on the basis of the image information and the object-zone information both supplied from first control section 22. Characteristic-quantity generation section 24, furthermore, supplies the zone characteristic-quantity information inclusive of the extracted characteristic quantities of the object zones, to first control section 22.

Characteristic-quantity synthesis section 25 calculates synthesized characteristic quantities of objects that are generated by synthesizing the characteristic quantities of a plurality of objects for all required combinations of the plurality of objects, on the basis of the zone characteristic-quantity information and the first zone-correspondence information supplied from first control section 22, and then characteristic-quantity synthesis section 25 supplies the synthesized characteristic-quantity information inclusive of the synthesized characteristic quantities to first control section 22.

Like the first working example, the first first zone-correspondence information includes the information about the corresponding relationship between objects and object zones as well as the information about the states of tracking of the objects. In addition, the first zone-correspondence information is generated at first control section 22 in the present embodiment.

First control section 22 receives image information by way of image input terminal 21 for receiving image signals provided from a video camera or the like. First control section 22 supplies the image information to object-zone extraction section 23 and receives the object-zone information from object-zone extraction section 23. First control section 22 further generates the first zone-correspondence information on the basis of the object-zone information and the past correspondence information that has been determined and supplies the generated first zone-correspondence information, the image information and the object-zone information to characteristic-quantity generation section 24. First control section 22, still further, receives the zone characteristic-quantity information supplied from characteristic-quantity generation section 24, and provides the zone characteristic-quantity information and the first zone-correspondence information to characteristic-quantity synthesis section 25. Furthermore, first control section 22 receives the synthesized characteristic-quantity information supplied from characteristic-quantity synthesis section 25.

First control section 22 calculates the degrees of similarity between the characteristic quantities of the object zones included in the zone characteristic-quantity information and the synthesized characteristic quantities included in the synthesized characteristic-quantity information, calculates the degrees of combined similarity and decides the optimum correspondences between the objects and object zones. First control section 22 then provides the information about the decided corresponding relationship between the objects and object zones as correspondence information that has been determined.

Fig. 13 is a block diagram illustrating an example of the construction of first control section 22. As shown in Fig. 13, first control section 22 includes second control section 221, object-tracking section 222, state-deciding section 223 and correspondence-calculation section 224.

It is to be noted that, while first control section 22 (second control section 221, object-tracking section 222, state-deciding section 223 and correspondence-calculation section 224), object-zone extraction section 23, characteristic-quantity generation section 24 and characteristic-quantity synthesis section 25 can be realized by hardware, they can be realized by software as well. Specifically, these sections can be realized through the use of a CPU, which is capable of executing the processes to be performed by first control section 22, object-zone extraction section 23, characteristic-quantity generation section 24 and characteristic-quantity synthesis section 25 in accordance with programs and also the program stored in a storage device for implementing the functions of first control section 22, object-zone extraction section 23, characteristic-quantity generation section 24 and characteristic-quantity synthesis section 25, as explained below.

Second control section 221, upon receiving image information by way of image input terminal 21, provides the image information to object-zone extraction section 23. Second control section 221 further supplies the current object-zone information provided by object-zone extraction section 23, the past object-zone information stored by second control section 221 itself and the past correspondence information that has been determined stored in second control section 221 itself to object-tracking section 222. Second control section 221 further supplies the image information received through image input terminal 21 and the object-zone information provided by object-zone extraction section 23 to characteristic-quantity generation section 24. The content of the correspondence information that has been determined is the same as that of the first working example.

Second control section 221, upon receiving the second zone-correspondence information from object-tracking section 222, supplies the second zone-correspondence information and the object-zone information to state-deciding section 223. The content of the second zone-correspondence information is the same as that of the first working example.

Still further, second control section 221, upon receiving the first zone-correspondence information from state-deciding section 223, supplies the characteristic quantities of objects and the first zone-correspondence information to characteristic-quantity synthesis section 25 only in regard to the object zones that are indicated in the first zone-correspondence information as being in the state of parting while in their tracking states. The content of the first zone-correspondence information is the same as that of the first working example.

Second control section 221, upon receiving synthesized characteristic-quantity information from characteristic-quantity synthesis section 25, provides the zone characteristic-quantity information, the synthesized characteristic-quantity information and the first zone-correspondence information to correspondence-calculation section 224. Further, for the objects that are indicated in the first zone-correspondence information supplied from state-deciding section 223, as being non-parting (in the state other than the state of parting) while in their tracking states, second control section 221 decides to designate the correspondences to the object zones included in the first zone-correspondence information as the corresponding relationship between the objects of interest and the object zones. For the objects that are indicated in the first zone-correspondence information as being parting while in their tracking states, second control section 221 decides to designate the correspondences to the object zones included in the optimum-correspondence information provided by correspondence-calculation section 224 as the corresponding relationship between the objects of interest and the object zones. The content of the optimum-correspondence information provided by correspondence-calculation section 224 is the same as that described in the first working example.

Object-tracking section 222 tracks objects based on the current object-zone information received from second control section 221, the past object-zone information stored in second control section 221 and the past correspondence information that has been determined and supplies the second zone-correspondence information to second control section 221. The method by which object-tracking section 222 tracks an object is the same as the method of tracking an object in the first working example.

State-deciding section 223 decides the states of tracking of objects based on the second zone-correspondence information and the object-zone information both received from second control section 221 and supplies the first zone-correspondence information to second control section 221.

Correspondence-calculation section 224, based on the zone characteristic-quantity information provided from second control section 221, the synthesized characteristic-quantity information and the first zone-correspondence information, calculates the degrees of similarity between the synthesized characteristic quantities of objects and characteristic quantities of object zones for all the possible combinations of objects and object zones and calculates the degrees of combined similarity; decides to designate the combination of the objects and object zones having the highest degree of combined similarity as an optimum correspondence between the objects and object zones and provides the optimum correspondence information; and supplies the optimum correspondence information to second control section 221.

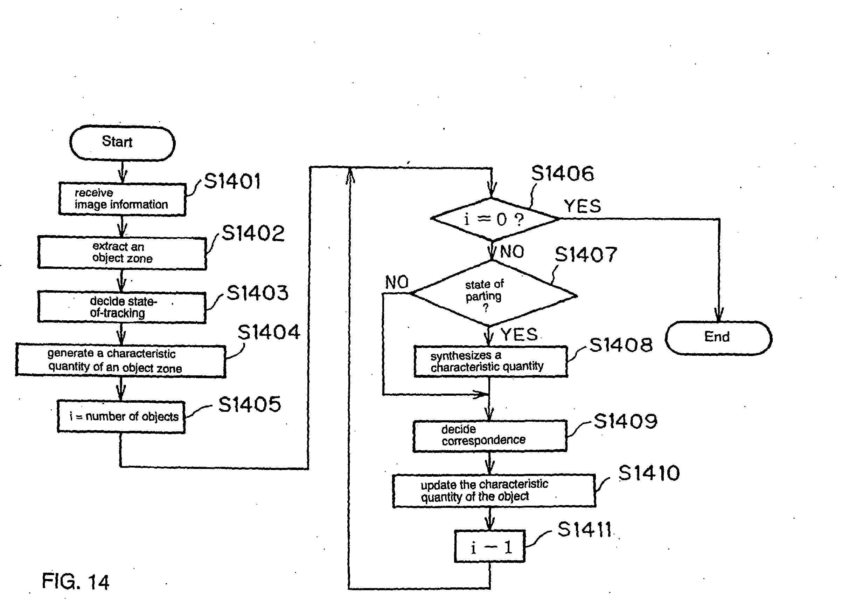

Explanation next regards the operation of the object-tracking device according to the third embodiment. Fig. 14 is a flow chart illustrating an example of the process of the object-tracking device. When receiving image information by way of image input terminal 21 (Step S1401), object-zone extraction section 23 extracts object zones from the image information (Step S1402) and supplies object-zone information including the image information about the object zones.

Object-tracking section 222 tracks an object and associates the object and object zone in corresponding relationship to provide the second zone-correspondence information. State-deciding section 223 decides the states of tracking of the object based on the second zone-correspondence information and the object-zone information (Step S1403). Characteristic-quantity generation section 24 calculates the characteristic quantities of object zones (Step S1404).

Second control section 221 is provided with counter i. Second control section 221 sets the number of objects on counter i (Step S1405). Second control section 221 decides whether or not the value of counter i is "0" (Step S1406) and if the value of counter i is "0", then ends the process. If the value of counter i is not "0", then second control section 221 instructs the execution of the next step S1407 to state-deciding section 223.

State-deciding section 223 decides whether or not the state of tracking an object is the state of parting (Step S1407). If state-deciding section 223 decides that the state of tracking of the object is a state of parting, then characteristic-quantity synthesis section 25 synthesizes characteristic quantities of objects for all the required combinations of a plurality of objects to generate synthesized characteristic quantities (Step S1408).

Correspondence-calculation section 224 calculates the degrees of similarity between synthesized characteristic quantities of objects and characteristic quantities of object zones and calculates the degrees of combination similarities, for all of the possible combinations of objects and object zones. Second control section 221 decides to designate the combination of objects and object zones that has the highest degree of similarity calculated by correspondence-calculation section 224 as an optimum correspondence relation between objects and object zones (Step S1409).

If state-deciding section 223 decides in Step S1407 that the state of tracking is a state other than the state of parting, then second control section 221 decides to designate the correspondences between objects and object zones included in the first zone-correspondence information as optimum corresponding relationship between objects and object zones (Step S1409).

Characteristic-quantity generation section 24 updates the characteristic quantities of the objects that are decided on the corresponding relationship (Step S1410), wherein characteristic-quantity generation section 24 updates exclusively the characteristic quantities of the objects that are indicated as being stand-alone while in their tracking states.

Second control section 221 next decrements the counter value by 1 (Step S1411), and the processes are repeatedly executed from Step S1407 to Step S1410 until the counter value is decided to be "0" at Step S1406. In other words, the processes from Step S1407 to Step S1410 are executed until optimum corresponding relationship to object zones are decided for all the objects. Upon completing the processes (from Step S1407 to Step S1410) to determine the corresponding relationship to object zones for all the objects, the processes are again executed from Step S1401.

The construction of the object-tracking device as described above enables realizing the object-tracking device having the same function as the first working example.

It is to be noted that the constructions illustrated in Figs. 12 and 13 can be realized through the use of software. Specifically, in the present embodiment, the object-tracking device can be realized by means of the object-tracking program for executing the following processes: image input process for receiving image information; state-of-tracking decision process for deciding the state of tracking of each object or object zone on the basis of the object-zone information and the correspondence information that has been determined indicative of the corresponding relationship between object zones and objects prior to the present and providing the first zone-correspondence information that indicates the corresponding relationship between the object zones and objects and the states of tracking; characteristic-quantity generation process for generating zone characteristic quantities that represent characteristic quantities of object zones and object characteristic quantities that represent characteristic quantities of objects through the use of the image information, the object zone information and the decision result of the state-of-tracking decision means; and correspondence establishment process to determine the corresponding relationship between objects and object zones through deciding to designate the correspondences between objects and object zones included in the first zone-correspondence information as the correspondences between the objects and object zones if the objects are decided to be in the states other than the state of parting while in their tracking states, the state of parting being transient state through which an object zone is parting into a plurality of object zones, and alternatively if the objects are decided to be in the states of parting while in their tracking states, synthesize characteristic quantities for all the required combinations of a plurality of objects based on the characteristic quantities of objects and the first zone-correspondence information and generate each of synthesized characteristic quantities, compare each synthesized characteristic quantity with each zone characteristic quantity, and associate the objects and object zones in corresponding relationship under condition that the synthesized characteristic quantities of the objects and zone characteristic quantities of the object zones are of the highest degree of combined similarity.

**Claims**

1. An object-tracking device for tracking an object based on image information, comprising:

   a characteristic-quantity synthesizing means adapted to synthesize characteristic quantities of objects representative of characteristic quantities of respective objects included in said image information for generating synthesized characteristic quantities; and
   a correspondence-establishing means for establishing correspondences between object zones and objects on the basis of degrees of similarity between characteristic quantities of said object zones and said synthesized characteristic quantities, wherein said object zones refer to the zones that are extracted from said image information and include the objects of interest.

2. An object-tracking device according to claim 1, wherein said characteristic-quantity synthesizing means is adapted to synthesize characteristic quantities for each of all required combinations of a plurality of objects to generate said synthesized characteristic quantities, and
   said correspondence-establishing means establishes correspondences between objects and object zones through comparing each of said synthesized characteristic quantities generated by said characteristic-quantity synthesizing means and zone characteristic quantities representative of the characteristic quantities of object zones.

3. An object-tracking device according to claim 2, provided with:

   an object-zone extracting means for extracting said object zones from said image information and providing the object-zone information that includes the image information about said object zones,
   a state-of-tracking deciding means for deciding the states of tracking of individual objects or object zones, wherein said state-of-tracking means relative positions of each object with respect to other objects, and
   a characteristic-quantity generating means for generating said zone characteristic quantities and object characteristic quantities through the use of said image information, said object-zone information and the decision results effected by said state-of-tracking deciding means,

   wherein said characteristic-quantity synthesizing means generates synthesized characteristic quantities through the use of said object characteristic quantities and the decision results effected by said state-of-tracking deciding means.

4. An object-tracking device according to claim 3, wherein said state-of-tracking deciding means decides the states of tracking of respective objects or object zones based on the object-zone information and the correspondence information that has been determined that indicates the corresponding relationship between the object zones and objects prior to the present to provide the first zone-correspondence information that indicates the corresponding relationship among the object zones and objects and said states of tracking,
   said characteristic-quantity generating means generates zone characteristic quantities and object characteristic quantities based on the current image information, said object-zone information, said first zone-correspondence information and said correspondence information that has been determined,
   said characteristic-quantity synthesizing means generates synthesized characteristic quantities that serve as candidates to be placed in the corresponding relationship to individual object zones based on said object characteristic quantities and said first zone-correspondence information to provide synthesized characteristic-quantity information, wherein said synthesized characteristic-quantity information is the information that includes synthesized characteristic quantities and the corresponding relationship between the synthesized characteristic quantities and objects used for the generation of said synthesized characteristic quantities, and
   said correspondence-establishing means includes a correspondence-determining means that associates objects and object zones to place in the corresponding relationship based on said first zone-correspondence information, zone characteristic-quantity information that is the information indicative of said zone characteristic quantities and said synthesized characteristic-quantity information to provide said correspondence information that has been determined in the present time

5. An object-tracking device according to claim 3, wherein said state of tracking includes at least one of or a combination of: a stand-alone state in which only a single object resides in an object zone; a crossover state in which a plurality of objects correspond to a single object zone; and a state of parting that is a transient state in which a single object zone is parted into a plurality of object zones.

6. An object-tracking device according to claim 4, wherein said state of tracking includes at least one of or a combination of: a stand-alone state in which only a single object resides in an object zone; a crossover state in which a plurality of objects correspond to a single object zone; and a state of parting that is a transient state in which a single object zone is parted into a plurality of object zones.

7. An object-tracking device according to claim 4, wherein said characteristic-quantity generating means generates zone characteristic quantities, each including at least one of or one of combinations of a color histogram, area, image template and color histogram normalized with respect to said area, of the object zone, and finds an object zone corresponding to the object of interest from the first zone-correspondence information and provides at least one or one of combinations of a color histogram, area, image template and color histogram normalized with respect to said area of the object zone as an object characteristic quantity.

8. An object-tracking device according to claim 4, wherein said state-of-tracking deciding means includes an object-zone storing means for storing the object-zone information, an object-tracking means for tracking an object based on said object-zone information, the correspondence information that has been determined and the object-zone information prior to the present that is provided from said object-zone storing means and further providing a second zone-correspondence information that indicates the correspondences between objects and object zones, and a state-deciding means for deciding the states of tracking of objects based on said second zone-correspondence information, said object-zone information and said object-zone information prior to the present and providing said first zone-correspondence information.

9. An object-tracking device according to claim 8, wherein said state-deciding means, based on at least one of or one of the combinations of the correspondences between objects and object zones, distances between object zones and continued periods of separation of said object zones, obtained from said second zone-correspondence information and object-zone information, groups the objects that have a common region in their corresponding object zones to sort the objects and corresponding object zones into one class, and sorts the object, which differs in the corresponding object zone from any other objects, and the object zone corresponding thereto into one class to sort the objects and object zones into a plurality of classes, and decides the state of tracking on the basis of the sorted classes.

10. An object-tracking device according to claim 9, wherein said state of tracking includes the state of parting that is a transient state through which an object zone parts into a plurality of object zones, said state-deciding means decides that, if two or more object zones are included in a sorted class, then the class meets the condition of being in a state of parting, and that, if a class meets the condition of being in a state of parting, the states of tracking of the objects and object zones included in the class are the state of parting.

11. An object-tracking device according to claim 10, wherein if the sorted class meets the condition of being in the state of parting and if the sorted class meets at least one of or one of the combinations of the conditions that two or more objects are included in said class, that each of the distances between the object zones included in said class exceeds a predetermined threshold and that continued periods of separation of the object zones included in said class exceed a predetermined threshold, said state-deciding means decides that the states of tracking of the objects and object zones included in the class are said state of parting.

12. An object-tracking device according to claim 10, wherein said state of tracking includes a state of parting and a stand-alone state in which a single object resides in an object zone, and if the sorted class includes only one object and if the states of tracking of the object and the object zone included in said class are not the state of parting, then said state-deciding means decides that the states of tracking of the object and the object zone included in said class are the stand-alone state.

13. An object-tracking device according to claim 11, wherein said state of tracking includes a state of parting and a stand-alone state in which a single object resides in an object zone, and

if the sorted class includes only one object and if the states of tracking of the object and the object zone included in said class are not the state of parting, then said state-deciding means decides that the states of tracking of the object and the object zone included in said class are the stand-alone state.

**14.** An object-tracking device according to claim 10, wherein said state of tracking includes a state of parting and also a crossover state in which a plurality of objects are in corresponding relationship to a single object zone, and

if a sorted class includes two or more objects and if the states of tracking of the objects and the object zones included in said class are not the state of parting, said state-deciding means decides that the states of tracking of the objects and the object zones included in said class are the crossover state.

**15.** An object-tracking device according to claim 11, wherein said state of tracking includes a state of parting and also a crossover state in which a plurality of objects are in correspondence relation to a single object zone, and

if a sorted class includes two or more objects and if the states of tracking of the objects and the object zones included in said class are not the state of parting, said state-deciding means decides that the states of tracking of the objects and the object zones included in said class are the crossover state.

**16.** An object-tracking device according to claim 4, wherein said characteristic-quantity generating means includes:

a characteristic-quantity extracting means for extracting zone characteristic quantities from the image information, object-zone information and the first zone-correspondence information and providing the zone characteristic-quantity information that is the information indicative of said zone characteristic quantities; characteristic-quantity storing means for storing object characteristic quantities and selecting the stored object characteristic quantities to supply the selected object characteristic quantities, as required, and characteristic-quantity updating means for updating said object characteristic quantities stored in said characteristic-quantity storing means based on said zone characteristic-quantity information, said first zone-correspondence information or correspondence information that has been determined and the object characteristic quantities generated prior to the present.

**17.** An object-tracking device according to claim 16, wherein

said state of tracking includes the state of parting that is a transient state through which an object zone parts into a plurality of object zones, and

said characteristic-quantity extracting means includes, in zone characteristic-quantity information, the information indicating that there is no need for establishing correspondences to objects for the object zones that represent the states other than the state of parting while in their tracking states, and

said correspondence-determining means excludes, from the establishment of the corresponding relationship, the object zones indicated in said zone characteristic-quantity information as there is no need to establish corresponding relationship to objects.

**18.** An object-tracking device according to claim 16, wherein said state of tracking includes a stand-alone state in which a single object resides in an object zone, and

said characteristic-quantity updating means

decides whether or not the state of tracking of an object is the stand-alone state on the basis of the first zone-correspondence information or the correspondence information that has been determined, and

if the state of tracking of the object is the state other than the stand-alone state, does not update the object characteristic quantities stored in said characteristic-quantity storing means.

**19.** An object-tracking device according to claim 4, wherein said characteristic-quantity synthesizing means

determines all possible combinations of objects and object zones based on the object characteristic quantities generated by said characteristic-quantity generating means and the first zone-correspondence information, and

synthesizes object characteristic quantities only for the determined combinations of objects and object zones to generate synthesized characteristic quantities.

**20.** An object-tracking device according to claim 4, wherein characteristic-quantity synthesizing means calculates the synthesis ratios that are coefficients for adjusting the ratios at which the object characteristic quantities are synthesized, and generates synthesized characteristic quantities on the basis of said synthesis ratios and object characteristic quantities.

**21.** An object-tracking device according to claim 4, wherein said characteristic-quantity synthesizing means receives zone characteristic quantities as well as object characteristic quantities from the characteristic-quantity generating means, calculates synthesized characteristic quantities depending on desired synthesis ratios on the basis of the received zone characteristic-quantity information and object characteristic quantities, and provides the synthesized characteristic quantity for the synthesis ratio that yields the highest of all degrees of similarity between the calculated synthesized characteristic quantities and the zone characteristic quantities.

**22.** An object-tracking device according to claim 4, wherein said state of tracking includes a state of parting that is a transient state through which an object zone parts into a plurality of object zones, and
said characteristic-quantity synthesizing means generates synthesized characteristic quantities only for the object zones that are indicated as having the state of parting as their states of tracking.

**23.** An object-tracking device according to claim 4, wherein said object characteristic quantity includes an area of an object, and
said characteristic-quantity synthesizing means calculates the synthesis ratios that are coefficients for adjusting the ratios at which the object characteristic quantities are synthesized on the basis of the areas of objects included in said object characteristic quantities and generates synthesized characteristic quantities from said synthesis ratios and said object characteristic quantities.

**24.** An object-tracking device according to claim 23, wherein said characteristic-quantity synthesizing means limits the synthesis ratios within a predetermined range on the basis of the variations in the areas of objects.

**25.** An object-tracking device according to claim 4, wherein said characteristic-quantity synthesizing means receives zone characteristic quantities together with object characteristic quantities from the characteristic-quantity generating means, calculates synthesized characteristic quantities within the range of the variations in the areas of objects based on the received zone characteristic quantities and object characteristic quantities, and provides the synthesized characteristic quantities that have the highest degrees of similarity to the zone characteristic quantities of the object zones of interest.

**26.** An object-tracking device according to claim 4, wherein said object characteristic quantity includes an image template representative of the shape and color of an object, and
said characteristic-quantity synthesizing means decides the back-to-belly relation of each of the objects from the image templates and zone characteristic quantities and obtains the synthesized characteristic quantities by synthesizing the image templates based on the respective decided back-to-belly relations of said objects.

**27.** An object-tracking device according to claim 4, wherein said correspondence-determining means is provided with
a correspondence-calculating means for calculating the combination of objects and object zones which have the highest similarity from all the possible combinations of the objects and object zones that are possibly associated in corresponding relationship based on said synthesized characteristic-quantity information, said zone characteristic-quantity information and said first zone-correspondence information, selecting the calculated combination of objects and object zones as an optimum combination and generating the optimum-correspondence information that indicates the optimum corresponding relationship between objects and object zones, and
a correspondence-deciding means for determining the corresponding relationship between objects and object zones on the basis of said first zone-correspondence information and said optimum-correspondence information and providing the correspondence information that has been determined that is the information that includes the corresponding relationship that has been decided between objects and object zones.

**28.** An object-tracking device according to claim 27, wherein said correspondence-calculating means calculates a total degree of similarity for each of all the possible combinations of objects and object zones, said total degree of similarity being a sum of the degrees of similarity between the characteristic quantities of object zones and synthesized characteristic quantities within each combination, and decides the combination that has the highest similarity based on the combination having the highest, total degree of similarity, of said all the possible combinations.

**29.** An object-tracking device according to claim 27, wherein said first zone-correspondence information includes the information about an at-rest/in-motion state that indicates whether an object zone is at rest or in motion, and
said correspondence-calculating means excludes the combination of the object and object zone that is indicated as being at rest in said information about an at-rest/in-motion state from said all possible combinations.

**30.** An object-tracking device according to claim 27, wherein if the degrees of combined similarity that can be obtained from the degrees of similarity of the sets of the objects and object zones, said sets of the objects and object zones making up the combinations decided to be ranked as the highest similarity, are equal to or lower than a predetermined threshold, then said correspondence-calculating means selects the combinations of the degrees of combined similarity within said predetermined threshold, from the combinations of the degrees of combined similarity ranked as the highest similarity of all possible combinations of objects and object zones, includes the corresponding relationship of objects and object zones common to the selected combinations, into the optimum-correspondence information as optimum correspondences, and further, for the objects and object zones having the corresponding relationship that are not included in said corresponding relationship of the object and object zone common to said selected combinations, includes the information indicating that there are no optimum correspondence between the objects and object zones, into the optimum-correspondence information,

for the objects not indicated as having no optimum corresponding relationship to any object zones in said optimum-correspondence information, said correspondence-deciding means provides the information indicating the corresponding relationship of objects and object zones included in said optimum-correspondence information as the correspondence information that has been determined, and

for the objects indicated as having no optimum corresponding relationship to any object zones in said optimum-correspondence information, said correspondence-deciding means provides the information indicating the corresponding relationship of objects and object zones included in said first zone-correspondence information as the correspondence information that has been determined.

**31.** An object-tracking device according to claim 28, wherein if the degrees of combined similarity that can be obtained from the degrees of similarity of the sets of the objects and object zones, said sets of the objects and object zones making up the combinations decided to be ranked as the highest similarity, are equal to or lower than a predetermined threshold, then said correspondence-calculating means selects the combinations of the degrees of combined similarity within said predetermined threshold, from the combinations of the degrees of combined similarity ranked as the highest similarity of all possible combinations of objects and object zones, includes the corresponding relationship of objects and object zones common to the selected combinations, into the optimum-correspondence information as optimum correspondences, and further, for the objects and object zones having the corresponding relationship that are not included in said corresponding relationship of the object and object zone common to said selected combinations, includes the information indicating that there are no optimum correspondence between the objects and object zones, into the optimum-correspondence information,

for the objects not indicated as having no optimum corresponding relationship to any object zones in said optimum-correspondence information, said correspondence-deciding means provides the information indicating the corresponding relationship of objects and object zones included in said optimum-correspondence information as the correspondence information that has been determined, and

for the objects indicated as having no optimum corresponding relationship to any object zones in said optimum-correspondence information, said correspondence-deciding means provides the information indicating the corresponding relationship of objects and object zones included in said first zone-correspondence information as the correspondence information that has been determined.

**32.** An object-tracking device according to claim 27, wherein said state of tracking includes a state of parting that is a transient state through which an object zone parts into a plurality of object zones, and

said correspondence-deciding means determines the corresponding relationship between objects and object zones to be indicated in the optimum-correspondence information only for the object zones that exhibit a state of parting as their states of tracking.

**33.** An object-tracking device according to claim 27, wherein said state of tracking includes a state of parting that is a transient state through which an object zone parts into a plurality of object zones, and

said correspondence-deciding means provides the correspondences between objects and object zones included in the first zone-correspondence information as the correspondence information that has been determined only for the object zones that exhibit states other than the state of parting while in their tracking states.

**34.** An object-tracking method for tracking an object based on image information, comprising steps of:

synthesizing object characteristic quantities, which represent characteristic quantities of respective objects included in said image information, to generate a synthesized characteristic quantity, and
establishing corresponding relationship between object or objects and object zone on the basis of the degree of similarity between said synthesized characteristic quantity and characteristic quantity of said object zone, wherein said object zone is a region extracted from said image information and including said object or objects.

35. An object-tracking method according to claim 34, including steps of
synthesizing characteristic quantities for each of all required combination of a plurality of objects to generate a synthesized characteristic quantity, and
establishing corresponding relationship between object or objects and object zone through comparison of the generated synthesized characteristic quantity and zone characteristic quantity that represents the characteristic quantity of said object zone.

36. An object-tracking method according to claim 35, including steps of
extracting an object zone from said image information and providing the object-zone information that includes image information about said object zone,
deciding a state of tracking representative of a relative position with respect to another object for every object or object zone,
generating zone characteristic quantities, object characteristic quantities through the use of said image information, said object-zone information, and the decision results, and
generating synthesized characteristic quantities through the use of said object characteristic quantities and said decision results.

37. An object-tracking method according to claim 36, including steps of
deciding the state of tracking of every object or every object zone based on said object-zone information and the correspondence information that has been determined that indicates the corresponding relationship between object zones and objects prior to the present and providing the first zone-correspondence information indicative of the corresponding relationship between the objects and object zones and the states of tracking,
generating zone characteristic quantities and object characteristic quantities based on the present image information, said object-zone information, said first zone-correspondence information and said correspondence information that has been determined,
generating a synthesized characteristic quantity that functions as a candidate to be placed in corresponding relationship to each object zone on the basis of said object characteristic quantities and said first zone-correspondence information and providing the synthesized characteristic-quantity information, which is the information that includes said synthesized characteristic quantities and the corresponding relationship between synthesized characteristic quantities and objects used for generating the synthesized characteristic quantities of interest, and
establishing correspondences between objects and object zones based on said first zone-correspondence information, zone characteristic-quantity information, which is the information indicative of said zone characteristic quantities, and said synthesized characteristic-quantity information, and providing said correspondence information that has been determined at present.

38. An object-tracking method according to claim 36, wherein said state of tracking includes at least one of or one of combinations of a stand-alone state, in which only a single object is present in an object zone, a crossover state, in which a plurality of objects are present in a single object zone, and a state of parting that is a transient state through which an object zone parts into a plurality of object zones.

39. An object-tracking method according to claim 37, wherein said state of tracking includes at least one of, or one of combinations of a stand-alone state, in which only a single object is present in an object zone, a crossover state, in which a plurality of objects are present in a single object, and a state of parting that is a transient state through which an object zone parts into a plurality of object zones.

40. An object-tracking method according to claim 37, including steps of
generating, as a zone characteristic quantity, at least one of, or one of the combinations of the color histograms, areas, image templates and color histograms normalized with respect to respective areas, of object zones, and
seeking the object zones corresponding to said objects from said first zone-correspondence information, and generating, as an object characteristic quantity, at least one of, or one of the combinations of the color histograms, areas, image templates and color histograms normalized with respect to respective areas of said object zones.

41. An object-tracking method according to claim 37, including steps of storing said object-zone information,
tracking an object on the basis of said object-zone information, the correspondence information that has been determined and the object-zone information prior to the present and providing a second zone-correspondence information indicative of the correspondence between the object and object zone,and

deciding the state of tracking an object on the basis of said second zone-correspondence information, said object-zone information and said object-zone information prior to the present and providing said first zone-correspondence information.

42. An object-tracking method according to claim 41, including steps of

sorting objects and object zones into a plurality of classes by: grouping the objects based on those objects which have a common region in the corresponding object zone, to enroll said objects and the corresponding object zones in one class; and for the objects that correspond to the object zones that differ from the object zones corresponding to any other objects, enroling the objects and the corresponding object zone in one class, based on at least one of, or one of combinations of the corresponding relationship between objects and object zones, the distances between object zones, and the duration period for on-parting of object zones calculated from said second zone-correspondence information and said object-zone information; and

deciding the state of tracking based on the classified class.

43. An object-tracking method according to claim 42, wherein said state of tracking includes a state of parting that is a transient state through which a single object zone parts into a plurality of object zones, and

said object-tracking method includes steps of

deciding that a classified class meets the condition of being in the state of parting if the class includes two or more object zones, and

if a class meets the condition of being in the state of parting, deciding the state of parting based on the states of tracking the objects and object zones included in the class of interest.

44. An object-tracking method according to claim 43, including a step of:

if the classified class meets the condition of being in the state of parting and further meets at least one of, or one combination of the conditions that said class includes two or more objects, that the distances between the object zones included in said class exceed a predetermined threshold, and that the continued periods of separation of the object zones included in said class exceed a predetermined threshold, deciding the state of parting based on the states of tracking the objects and object zones included in said class.

45. An object-tracking method according to claim 43, wherein said state of tracking includes the state of parting and a stand-alone state in which a single object is present in an object zone, and said object-tracking method includes a step of

deciding that the states of tracking of the object and object zone are the stand-alone state if the classified class includes a single object and also neither of the states of tracking of the object and the object zone included in the class is the state of parting.

46. An object-tracking method according to claim 44, wherein said state of tracking includes the state of parting and a stand-alone state in which a single object is present in an object zone, and said object-tracking method includes a step of

deciding that the states of tracking of the object and object zone are the stand-alone state if the classified class includes a single object and also neither of the states of tracking of the object and the object zone included in the class is the state of parting.

47. An object-tracking method according to claim 43, wherein said state of tracking includes the state of parting and the crossover state in which a plurality of objects correspond to a single object zone, and said object-tracking method includes a step of

deciding that the states of tracking of the objects and object zone included in the classified class are the crossover state if the class includes two or more objects and neither of the states of tracking of the objects and the object zone included in the class is the state of parting.

48. An object-tracking method according to claim 44, wherein said state of tracking includes the state of parting and the crossover state in which a plurality of objects correspond to a single object zone, and said object-tracking method includes a step of

deciding that the states of tracking of the objects and object zone included in the classified class are the crossover state if the class includes two or more objects and neither of the states of tracking of the objects and the object zone included in the class is the state of parting.

**49.** An object-tracking method according to claim 37, including steps of

extracting zone characteristic quantities from said image information, said object-zone information and said first zone-correspondence information and providing the zone characteristic-quantity information, which is the information indicative of said zone characteristic quantities,

storing said object characteristic quantities and selecting the stored object characteristic quantities to be provided as required, and

updating said stored object characteristic quantities on the basis of said zone characteristic-quantity information, said first zone-correspondence information or the correspondence information that has been determined and the object characteristic quantities generated prior to the present.

**50.** An object-tracking method according to claim 49, wherein said state of tracking includes the state of parting that is a transient state through which an object zone parts into a plurality of object zones, and said object-tracking method includes steps of

including, into the zone characteristic-quantity information, the information which indicates that there is no need to establish corresponding relationship to any objects, for the object zones that are indicated as having states other than the state of parting while in their tracking states, and

excluding the object zones, in which the zone-correspondence information indicates that there is no need of establishing the corresponding relationship to any objects, from the establishment of corresponding relationship.

**51.** An object-tracking method according to claim 49, wherein said state of tracking includes a stand-alone state in which a single object is present in an object zone, and said object-tracking method includes steps of

deciding whether or not the state of tracking is the stand-alone state based on said first zone-correspondence information or correspondence information that has been determined, and

skipping an update of the stored object characteristic quantity if the state of tracking of an object is any of the states other than the stand-alone state.

**52.** An object-tracking method according to claim 37, including steps of

determining all possible combinations of objects and object zones on the basis of said object characteristic quantities and said first zone-correspondence information, and

synthesizing object characteristic quantities to generate synthesized characteristic quantities only for the determined combinations of objects and object zones.

**53.** An object-tracking method according to claim 37, including steps of

finding synthesis ratios, which are the coefficients for adjusting the ratios of said object characteristic quantities to be synthesized, and

generating synthesized characteristic quantities on the basis of said synthesis ratios and object characteristic quantities.

**54.** An object-tracking method according to claim 37, including steps of

receiving zone characteristic quantities together with object characteristic quantities, calculating synthesized characteristic quantities for arbitrary synthesis ratios based on the received zone characteristic-quantity information and the object characteristic quantities, and providing the synthesized characteristic quantity corresponding to the highest degree of similarity between the zone characteristic quantity and the calculated synthesized characteristic quantity.

**55.** An object-tracking method according to claim 37, wherein said state of tracking includes a state of parting, said state of parting being a transient state through which an object zone parts into a plurality of object zones, and said object-tracking method includes a step of

generating synthesized characteristic quantities only for the object zones indicated as being in the state of parting while in their tracking states.

**56.** An object-tracking method according to claim 37, wherein said object characteristic quantity includes an area of an object, and said object-tracking method includes steps of

calculating a synthesis ratio, which is a coefficient for adjusting the ratios of the object characteristic quantities to be synthesized, on the basis of the areas of objects and generating a synthesized characteristic quantity from the calculated synthesis ratio and object characteristic quantities.

**57.** An object-tracking method according to claim 56, wherein said synthesis ratio is restricted within a range predetermined on the basis of the variations of the object areas.

**58.** An object-tracking method according to claim 37, including steps of

receiving said zone characteristic quantities together with said object characteristic quantities, generating synthesized characteristic quantities within the range of variations in the object areas based of the received zone characteristic quantities and the object characteristic quantities, and providing the synthesized characteristic quantity which has the highest degree of similarity to the zone characteristic quantity of the object zone of interest.

**59.** An object-tracking method according to claim 37, wherein said object characteristic quantity includes an image template, which describes a shape and/or color of an object, and said object-tracking method includes steps of

deciding the back-to-belly relations of the objects on the basis of the image templates and zone characteristic quantities, and synthesizing the image templates based on said decided back-to-belly relations of the objects to obtain a synthesized characteristic quantity.

**60.** An object-tracking method according to claim 37, including steps of

calculating, based on said synthesized characteristic-quantity information, said zone characteristic-quantity information and said first zone-correspondence information, the combination of objects and object zones which has the highest degree of similarity from all the possible combinations of objects and object zones that can be associated in corresponding relationship, selecting the calculated combination of objects and object zones as the objects and object zone of optimum correspondence, and generating the optimum-correspondence information that indicates the optimum correspondence relation of the objects and object zone, and

determining corresponding relationship between objects and object zones based on said first zone-correspondence information and said optimum-correspondence information and providing the correspondence information that has been determined, which is the information inclusive of the determined corresponding relationship between objects and object zones.

**61.** An object-tracking method according to claim 60, including steps of

calculating a total degree of similarity for all possible combinations of objects and object zones, wherein said total degree of similarity is a sum of the degrees of similarity between characteristic quantities of object zones and synthesized characteristic quantities in each of the combinations, and deciding that the combination of the highest total degree of similarity of all said possible combinations is the combination of the highest similarity.

**62.** An object-tracking method according to claim 60, wherein said first zone-correspondence information includes the information about an at-rest/in-motion state that indicates whether an object zone is at rest or in motion, and said object-tracking method includes a step of excluding, from all the possible combinations of objects and object zones, the combination of the object and object zone indicated as being in the at-rest state by said information about an at-rest/in-motion state.

**63.** An object-tracking method according to claim 60, including steps of:

if the degrees of combined similarity, obtained from the degrees of similarity of the sets of objects and an object zones that make up the combination decided as a combination of the highest similarity, is equal to or lower than a predetermined threshold, then selecting the combinations of the degrees of combined similarity within a predetermined threshold from the combinations of the degrees of combined similarity ranked as the highest similarity, of all the possible combinations of objects and object zones, including the corresponding relationship between objects and object zones common to the selected combinations into the optimum-correspondence information as optimum correspondences, and further including the information that indicates absence of optimum correspondence between any object and object zone in the optimum-correspondence information, for the object and object zone in the correspondence relation that is not included in the corresponding relationship of the objects and object zones common to said selected combinations;

for the objects not indicated in said optimum-correspondence information that are absent from the optimum corresponding relationship to object zones, providing the information indicating the corresponding relationship between the objects of interest and object zones included in said optimum-correspondence information, as the correspondence information that has been determined; and

for the objects indicated in said optimum-correspondence information that are absent from the optimum corresponding relationship to object zones, providing the information indicating the corresponding relationship between the objects of interest and object zones included in the first zone-correspondence information, as the correspondence information that has been determined.

**64.** An object-tracking method according to claim 61, including steps of:

if the degrees of combined similarity, obtained from the degrees of similarity of the sets of objects and object zones that make up the combination that is decided as the combination of the highest similarity, is equal to or lower than a predetermined threshold, then selecting the combinations of the degrees of combined similarity within a predetermined threshold from the combinations of the degrees of combined similarity ranked as having the highest similarity, from all the possible combinations of objects and object zones, including the corresponding relationship between objects and object zones common to the selected combinations in the optimum-correspondence information as optimum correspondences, and further including the information that indicates absence of an optimum correspondence between any object and object zone in the optimum-correspondence information, for the object and object zone in the correspondence relation that is not included in the corresponding relationship of the objects and object zones common to said selected combinations;

for the objects not indicated in said optimum-correspondence information that are absent from the optimum corresponding relationship to object zones, providing information indicating the corresponding relationship between the objects of interest and object zones included in said optimum-correspondence information, as the correspondence information that has been determined; and

for the objects indicated in said optimum-correspondence information that are absent from the optimum corresponding relationship to object zones, providing the information indicating the corresponding relationship between the objects of interest and object zones included in the first zone-correspondence information, as the correspondence information that has been determined.

**65.** An object-tracking method according to claim 60, wherein said state of tracking includes a state of parting, said state of parting being a transient state through which an object zone parts into a plurality of object zones, and said object-tracking method includes a step of

determining the corresponding relationship between objects and object zones to be identical with those indicated in the optimum-correspondence information only for the object zones that are indicated as having the state of parting while in their tracking states.

**66.** An object-tracking method according to claim 60, wherein said state of tracking includes a state of parting, said state of parting being a transient state through which an object zone parts into a plurality of object zones, and said object-tracking method includes a step of

providing the correspondences between objects and object zones included in the first zone-correspondence information as the correspondence information that has been determined only for the object zones indicated as having the state other than the state of parting while in their tracking states.

**67.** An object-tracking program for tracking an object based on image information, said program operating a computer to execute processes of

receiving image information,

synthesizing object characteristic quantities that represent characteristic quantities of respective objects included in said received image information and generating a synthesized characteristic quantity, and

establishing a correspondence between said objects and an object zone based on the degree of similarity between a characteristic quantity of said object zone and said synthesized characteristic quantity, said object zone being a region that is extracted from said image information and also includes said objects.

**68.** An object-tracking program for establishing correspondences between objects and object zones included in received image information, said program operating a computer to execute processes of

receiving image information,

extracting object zones from said received image information and providing the object-zone information inclusive of image information about said object zones,

deciding the state of tracking with each object or object zone on the basis of said object-zone information and the correspondence information that has been determined indicating corresponding relationship of the objects and object zones prior to the present and providing first zone-correspondence information, which indicates the corresponding relationship of said object zones and objects and the states of tracking,

generating the zone characteristic quantities, which represent the characteristic quantities of the object zones, and the object characteristic quantities, which represent the characteristic quantities of the objects through the use of said image information, said object-zone information and said first zone-correspondence information,

synthesizing characteristic quantities for all required combinations of a plurality of objects to generate each of synthesized characteristic quantities based on said object characteristic quantities and said first zone-correspondence information, and providing synthesized characteristic-quantity information, which is the information that includes said synthesized characteristic quantities and the corresponding relationship between the objects used for generating synthesized characteristic quantities and the synthesized characteristic quantities, and

associating said objects and object zones in corresponding relationship based on said first zone-correspondence information, said zone characteristic-quantity information and said synthesized characteristic-quantity information, and providing said correspondence information that has been determined for the present.

**69.** An object-tracking program for establishing correspondences between objects and object zones included in received image information, said program operating a computer to execute processes of

receiving image information,

deciding the state of tracking each object or each object zone on the basis of said object-zone information and the correspondence information that has been determined indicating the corresponding relationship of the objects and object zones prior to the present, and providing first zone-correspondence information, which indicates the corresponding relationship of said object zones and objects and the states of tracking,

generating the zone characteristic quantities, which represent the characteristic quantities of the object zones, and the object characteristic quantities, which represent the characteristic quantities of the objects through the use of said image information, said object-zone information and said first zone-correspondence information, and

while taking each of the objects as a target, deciding the correspondences between said objects and object zones through designating the correspondences between objects and object zones included in said first zone-correspondence information as said correspondences between said objects and object zones, for the objects that are decided to be in states other than a state of parting while in their tracking states, said state of parting being a transient state through which an object zone parts into a plurality of object zones; for the objects that are decided to be in the state of parting while in their tracking states, synthesizing characteristic quantities for all required combinations of a plurality of objects on the basis of said object characteristic quantities and said first zone-correspondence information to generate respective synthesized characteristic quantities; and comparing each of synthesized characteristic quantities with a zone characteristic quantity to associate the objects corresponding to the synthesized characteristic quantity, which has the highest degree of similarity to an object zone, with the object zone of interest to be placed in corresponding relationship.

FIG. 1

FIG. 2

FIG. 3

FIG. 4

```
                    ┌─────────────┐
                    │    Start    │
                    └──────┬──────┘
                           │
                    ┌──────▼──────┐
                    │receive image│ ╱─── S301
                    │ information │
                    └──────┬──────┘
                           │
                    ┌──────▼──────┐
                    │  extract an │ ╱─── S302
                    │ object zone │
                    └──────┬──────┘
                           │
                    ┌──────▼──────┐
                    │decide state-│ ╱─── S303
                    │ of-tracking │
                    └──────┬──────┘
                           │
              ┌────────────▼────────────┐
              │ generate a characteristic│ ╱─── S304
              │ quantity of an object zone│
              └────────────┬────────────┘
                           │
              ┌────────────▼────────────┐
              │ update the characteristic│ ╱─── S305
              │  quantity of the object  │
              └────────────┬────────────┘
                           │
                    ┌──────▼──────┐
                    │ synthesizes a│ ╱─── S306
                    │characteristic quantity│
                    └──────┬──────┘
                           │
                    ┌──────▼──────┐
                    │   decide    │ ╱─── S307
                    │correspondence│
                    └──────┬──────┘
                           │
                    ┌──────▼──────┐
                    │     End     │
                    └─────────────┘
```

| object zone | object | state |
|---|---|---|
| $\alpha$ | A, B | crossover |
| $\beta$ | C | stand-alone |
| $\gamma$ | D | stand-alone |

FIG. 5A

| object | object zone | state |
|---|---|---|
| A | $\alpha$ | crossover |
| B | $\alpha$ | crossover |
| C | $\beta$ | stand-alone |
| D | $\gamma$ | stand-alone |

FIG 5B

FIG. 5C

## FIG. 6

## FIG. 7A

| object zone | object |
|---|---|
| $\alpha$ | A,B |
| $\beta$ | C |
| $\gamma$ | D |

## FIG 7B

| object | object zone |
|---|---|
| A | $\alpha$ |
| B | $\alpha$ |
| C | $\beta$ |
| D | $\gamma$ |

## FIG. 7C

FIG. 8

determined
correspondence
information

14 characteristic-quantity
generation section

141

image
information

object zone
information

characteristic-
quantity
extraction
section

characteristic-
quantity
update
section

142

characteristic-
quantity
storage
section

143

object characteristic
quantity

characteristic quantity
information of the
object zone

first zone correspondence
information

FIG. 9

characteristic quantity
information of the
object zone

16: correspondence
decision section

161

correspondence
calculation section

synthesized characteristic
quantity information

first zone
correspondence
information

162

correspondence
establishment section

determined correspondence
information

FIG. 10A

FIG 10B

FIG. 11

FIG. 12

23

object-zone
extraction
section

24

characteristic-
quantity
generation
section

25

characteristic-
quantity
synthesis
section

21

first control section

22

FIG. 13

23

object-zone
extraction
section

24

characteristic-
quantity
generation
section

25

characteristic-
quantity
synthesis
section

221

21

second control section

object tracking
section

state decision
section

correspondence
calculation section

222

223

224

22

FIG. 14

EP 1 538 565 A1

## INTERNATIONAL SEARCH REPORT

| | International application No. |
|---|---|
| | PCT/JP03/10837 |

**A. CLASSIFICATION OF SUBJECT MATTER**
Int.Cl⁷ G06T7/20

According to International Patent Classification (IPC) or to both national classification and IPC

**B. FIELDS SEARCHED**

Minimum documentation searched (classification system followed by classification symbols)
Int.Cl⁷ G06T7/00-7/60, G06T1/00, H04N7/18, G08B13/00-15/02

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 7-21475 A (Fuji Electric Co., Ltd.), 24 January, 1995 (24.01.95), Par. Nos. [0015] to [0020] (Family: none) | 1-69 |
| A | JP 2-59976 A (Matsushita Electric Works, Ltd.), 28 February, 1990 (28.02.90), Claims (Family: none) | 1-69 |
| A | JP 4-245579 A (NTT Data Communications Systems Corp.), 02 September, 1992 (02.09.92), Par. No. [0002] (Family: none) | 1-69 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>20 November, 2003 (20.11.03) | Date of mailing of the international search report<br>09 December, 2003 (09.12.03) |
| Name and mailing address of the ISA/<br>Japanese Patent Office | Authorized officer |
| Facsimile No. | Telephone No. |

Form PCT/ISA/210 (second sheet) (July 1998)